# EUROPÄISCHE PATENTSCHRIFT

(11) **EP 3 523 245 B1**
(45) Veröffentlichungstag und Bekanntmachung des Hinweises auf die Patenterteilung: **13.05.2020**
(21) Anmeldenummer: 17788143.0
(22) Anmeldetag: 09.10.2017
(51) Int. Cl.: C01C 1/04

(54) **VERFAHREN ZUR HERSTELLUNG EINES PRODUKTS, INSBESONDERE VON AMMONIAK AUS EINEM SYNTHESEGAS**
METHOD FOR PRODUCING A PRODUCT, IN PARTICULAR AMMONIA, FROM A SYNTHESIS GAS
PROCÉDÉ POUR LA PRÉPARATION D'UN PRODUIT, EN PARTICULIER D'AMMONIAC À PARTIR D'UN GAZ DE SYNTHÈSE

(30) Priorität: 10.10.2016 DE 102016119226
(43) Veröffentlichungstag der Anmeldung: 14.08.2019
(73) Patentinhaber: thyssenkrupp Industrial Solutions AG, 45143 Essen (DE); thyssenkrupp AG, 45143 Essen (DE)
(72) Erfinder: GORVAL, Evgeni, 44135 Dortmund (DE)
(74) Vertreter: thyssenkrupp Intellectual Property GmbH
(86) Internationale Anmeldenummer: PCT/EP2017/075610
(87) Internationale Veröffentlichungsnummer: WO 2018/069212

(56) Entgegenhaltungen:
- EP-A1- 0 994 072
- GB-A- 495 129
- US-A- 2 046 478
- US-A- 5 997 834

## Beschreibung

Die Erfindung betrifft ein Verfahren und eine Vorrichtung zur Herstellung eines Produkts, insbesondere von Ammoniak, aus Synthesegas mit sequentiellen SyntheseKreisläufen, welche bei einem nahezu identischen Druckniveau betrieben werden.

Eine Reihe von Produkten in der Grundstoffindustrie, wie z.B. Ammoniak oder Methanol, werden in großtechnischen Gaskatalysen unter Einsatz von Schüttgutkatalysatoren synthetisiert. Die Synthesen verlaufen in der Regel bei Volumenabnahme unter sehr hohen Arbeitsdrücken bei hohen Arbeitstemperaturen.

Bei der Herstellung von Ammoniak enthält das Synthesegas Wasserstoff und Stickstoff und ggf. zusätzlich Inertgase wie Methan und/oder Edelgase. Bei diesem Verfahren wird üblicherweise zunächst das frische Synthesegas auf einen hohen Druck verdichtet und das verdichtete Synthesegas in einen Kreislauf eingespeist, der durch einen oder mehrere katalysatorgefüllte Reaktoren geführt wird, in denen Ammoniak erzeugt wird. Im Kreislauf ist üblicherweise ein Abscheidesystem vorgesehen, mit dem das erzeugte Ammoniak aus dem Kreislauf in flüssiger Form entnommen wird.

In der industriellen Praxis stoßen Großsynthesen, die üblicherweise als Kreislaufsynthesen ausgeführt werden, in der Auslegung als einsträngige Anlagen jedoch zunehmend an ihre Baugrenze. Geht man beispielsweise bei der Ammoniak-Synthese von einem maximal zulässigen Arbeitsdruck von etwa 250 bara und einer maximal zulässigen Arbeitstemperatur von etwa 400°C aus, so sind wirtschaftliche Baugrenzen für Druckbehälter und Rohrleitungen absehbar. Will man die Kapazität von Kreislaufsynthesen weiter erhöhen, so werden technologische Veränderungen notwendig.

Es wurden bisher verschiedene Lösungen zur Erhöhung der Kapazität insbesondere bestehender Anlagen vorgeschlagen.

DE 100 57 863 A1 offenbart ein Verfahren zur Herstellung von Ammoniak aus Synthesegas, welches außer den Reaktanden Wasserstoff und Stickstoff inerte Bestandteile enthält, in mindestens zwei Reaktionssystemen, wobei die Synthese von Ammoniak aus Synthesegas nacheinander in verschiedenen Synthesesystemen erfolgt, wobei in allen Synthesesystemen aus jeweils einem Teil des Synthesegases Ammoniak erzeugt und davon ein Teil ausgeschleust wird.

DD 225 029 betrifft ein Verfahren zur Synthese von Ammoniak aus inertenhaltigem Synthesegas, welches durch die Verwendung von zwei Reaktionssystemen gekennzeichnet ist. Im ersten Reaktionssystem wird nur frisches Synthesegas umgesetzt. Das nicht umgesetzte Synthesegas wird gemeinsam mit dem Gas eines Synthesekreislaufes zum zweiten Reaktionssystem geführt, wo die weitere Umsetzung zu Ammoniak erfolgt.

Die optimale Verschaltung mehrerer Synthesekreisläufe ist dabei jedoch nicht trivial. So stellt eine einfache Verdopplung eines bestehenden Synthesekreislaufs nicht zwangsläufig die beste Variante dar.

Aus der US4,568,531 A ist ein Verfahren zur Herstellung von Ammoniak bekannt, wobei einem ersten Synthesekreislauf frisches Synthesegas enthaltend Wasserstoff und Stickstoff in einem molaren Verhältnis von 3 : 1 zugeführt, mittels eines Kompressors auf einen erhöhten Druck gebracht und dann mit einem im Kreislauf geführten Gas gemischt wird, welches 12 Vol-% Ammoniak und nicht reagierte Eduktgase enthält. Das resultierende Synthesegasgemisch wird weiter verdichtet und gekühlt, so dass flüssiges Ammoniak anfällt, welches in einer Trennvorrichtung abgetrennt wird. Das an Ammoniak abgereicherte Restgasgemisch aus der Trennvorrichtung wird wieder erwärmt und einer ersten Ammoniaksyntheseeinheit zugeführt. Das Produktgas aus dieser ersten Ammoniaksyntheseeinheit wird gekühlt und dann in zwei Gasströme aufgeteilt, nämlich einen ersten Teilgasstrom, welcher als im Kreislauf geführtes Gas dient und zurückgeführt wird, um mit frischem Synthesegas gemischt zu werden. Der zweite Teilgasstrom ist ein Purgegas, welches nur 1,7 Vol-% an Produktgas enthält und neben den nicht abreagierten Eduktgasen Wasserstoff und Stickstoff die bei der Synthese inerten Gase Argon und Methan enthält. Das im Purgegas enthaltene Ammoniak wird durch Kühlung abgetrennt und der an Ammoniak abgereicherte Purgegasstrom wird zur Gewinnung von frischem Synthesegas verwendet. Dieser Purgegasstrom wird einem zweiten Synthesekreislauf zugeführt und dabei mit einem zweiten im Kreislauf geführten Gas aus dem Purgegassynthesekreislauf gemischt und auf 350 °C erwärmt. Es erfolgt dann eine zweite Synthese in einem Purgegaskonverter, welcher ein sphärischer Reaktor ist, in dem ein spezifischer Katalysator auf Rutheniumbasis ist, der eine erhöhte Aktivität aufweist, um so eine Synthese von zusätzlichem Ammoniak aus dem im Purgegasstrom enthaltenen Wasserstoff zu ermöglichen. In zwei aufeinanderfolgenden Trennvorrichtungen wird jeweils Ammoniak abgetrennt, wobei der an Ammoniak abgereicherte Gasstrom aus der ersten Trennvorrichtung als Kreislaufgas in den zweiten Synthesekreislauf zurückgeführt und mit dem Purgegas gemischt wird.

Bei diesem bekannten Verfahren zur Herstellung von Ammoniak wird somit der Produktgasstrom nach der ersten Ammoniaksynthese in zwei Teilströme aufgeteilt, wobei der erste Teilstrom als Kreisgas verwendet wird. Nur der zweite Teilstrom, der als Purgegasstrom bezeichnet wird, wird einer zweiten Ammoniaksyntheseeinheit zugeführt. Es handelt sich somit bei diesem bekannten Verfahren um eine Variante einer sequentiellen Ammoniaksynthese, bei dem man bezweckt, aus einem Teil Kreisgases durch Verwendung eines spezifischen aktiveren Katalysators weiteres Ammoniak zu gewinnen, um so die Gesamtausbeute des Verfahrens zu erhöhen.

In der US 5,997,834 A wird ein Verfahren beschrieben, bei dem ein Synthesegas bereitgestellt wird umfassend Reaktanden, dem ein an Produkt abgereichertes, in einem ersten Kreislauf geführtes Gasgemisch enthaltend Produkt und inerte Komponenten zugeführt wird, wobei anschließend eine Aufteilung erfolgt, bei der ein erster Teilstrom des Reaktionsgases einer ersten Syntheseeinheit zugeführt und ein Produktgas erzeugt wird, wobei aus dem Produktgas der ersten Syntheseeinheit ein Produkt abgetrennt und das an Produkt abgereicherte Gasgemisch in dem ersten Kreislauf zurückgeführt wird, wobei ein zweiter Teilstrom des Reaktionsgases unmittelbar einer zweiten Syntheseeinheit zugeführt wird. In dieser zweiten Syntheseeinheit wird ebenfalls Produktgas erzeugt und nach Abtrennung des Produkts wird ein an Produkt abgereichertes Gasgemisch als zweites Kreislaufgas zurückgeführt, wobei diese Rückführung jedoch in einen Bereich stromaufwärts der Aufteilung in zwei Teilströme erfolgt und somit ein Teilstrom dieses zweiten Kreislaufgases erneut an der Reaktion in der ersten Syntheseeinheit teilnimmt.

In der EP 0 994 072 A1 wird ein Verfahren zur Herstellung von Ammoniak beschrieben, bei dem zwei voneinander unabhängige Synthesegasströme parallel zueinander in jeweils separaten Syntheseeinheiten behandelt werden, so dass für jede Syntheseeinheit jeweils ein eigener Kompressor notwendig ist. Nach der Synthese wird zum einen ein erstes Kreislaufgas zum Kompressor des ersten Kreislaufs zurückgeführt und außerdem wird ein Purgegasstrom aus dem ersten Kreislauf abgeführt, mit einem Purgegasstrom aus dem zweiten Synthesekreislauf vereint und danach mit rückgeführtem Stickstoff angereichert und einer dritten Syntheseeinheit zugeführt, in der weiteres Produkt hergestellt wird. Bei diesem bekannten Verfahren erfolgt weder eine Aufteilung des Synthesegasstroms im Strömungsweg nach dem Kompressor und vor der ersten Syntheseeinheit noch ist eine Aufteilung eines Synthesegasstroms vor dem Kompressor auf die beiden Syntheseeinheiten vorgesehen.

Die Verfahren und die Vorrichtungen zur Herstellung eines Produkts aus Synthesegas sind damit nicht in jeder Hinsicht zufriedenstellend und es besteht ein Bedarf an verbesserten Verfahren und Vorrichtungen.

Es ist somit eine Aufgabe der Erfindung, ein vorteilhaftes Verfahren und eine vorteilhafte Vorrichtung zur Herstellung eines Produkts aus Synthesegas zur Verfügung zu stellen.

Diese Aufgabe wird durch den Gegenstand der Patentansprüche und der Beschreibung gelöst.

Ein erster Aspekt der Erfindung betrifft ein Verfahren zur Herstellung von Ammoniak, wobei das Verfahren die folgenden Schritte umfasst:
(a₁) Bereitstellen eines Synthesegases **A** umfassend die Reaktanden Stickstoff und Wasserstoff, sowie gegebenenfalls Produkt und gegebenenfalls inerte Komponenten;
(c₁) Vermischen des Synthesegases **A** mit einem in einem ersten Kreislauf geführten Gasgemisch **B** unter Erzeugung eines Reaktionsgases **C;**
(d₁) Aufteilen des Reaktionsgases **C** in einen Teilstrom **D** und einen Teilstrom **E;**
(e₁) Synthese von Produkt aus den Reaktanden, welche in dem Teilstrom **D** enthalten sind, in einer ersten Ammoniaksyntheseeinheit bei einem Druck P₁, unter Erzeugung eines Produktgases **F** umfassend nicht umgesetzte Reaktanden, Produkt und gegebenenfalls inerte Komponenten;
(f₁) Abtrennen von Produkt aus dem Produktgas F unter Erzeugung eines an Produkt abgereicherten Gasgemischs **G;**
(g₁) Rückführen des Gasgemischs **G** als im ersten Kreislauf geführtes Gasgemisch **B** zu Schritt (c₁);
(i₁) Vermischen des Teilstroms **E** mit zumindest einem Teil eines in einem zweiten Kreislauf geführten Gasgemischs **H** umfassend nicht umgesetzte Reaktanden, sowie gegebenenfalls Produkt und gegebenenfalls inerte Komponenten unter Erzeugung eines Reaktionsgases **I;**
   wobei nach der Aufteilung des Reaktionsgases in die beiden Teilströme D und E der erste Teilstrom **D** der ersten Ammoniaksvntheseeinheit zugeführt wird, die Teil des ersten Synthesekreislaufs ist, während der zweite Teilstrom **E** in einen zweiten Synthesekreislauf überführt, dort mit dem Kreislaufgas **H** aus dem zweiten Synthesekreislauf vermischt und dann einer zweiten Ammoniaksyntheseeinheit zugeführt wird, die Teil des zweiten Synthesekreislaufs ist;
(j₁) Synthese von Produkt aus Reaktanden, welche in dem Reaktionsgas **I** enthalten sind, in einer zweiten Ammoniaksyntheseeinheit bei einem Druck P₂, unter Erzeugung eines Produktgases **J** umfassend nicht umgesetzte Reaktanden und Produkt und ggf. inerte Komponenten;
(k₁) Abtrennen von Produkt aus dem Produktgas **J** unter Erzeugung eines an Produkt abgereicherten Gasgemischs **K;**
(l₁) Aufteilen des Gasgemischs **K** in mindestens einen Teilstrom **L** und einen Teilstrom **M,** und Rückführen zumindest eines Teils des Teilstroms **L** als im zweiten Kreislauf geführtes Gasgemisch **H** zu Schritt (i₁); und
(m₁) Ausschleusen des Teilstroms **M.**

Bei einer Ammoniaksynthese mit mindestens zwei Synthesekreisläufen gibt es grundsätzlich die Möglichkeit, beide Synthesekreisläufe so zu verschalten, dass die Synthese in beiden Synthesekreisläufen rein sequentiell erfolgt. Alternativ besteht die Möglichkeit einer rein parallelen Verschaltung der beiden Synthesekreisläufe, wobei man aus beiden Synthesekreisläufen einen Purgegasstrom abführt. Die vorliegende Erfindung schlägt quasi eine Mischform dieser beiden Ansätze vor, bei der der Purgegasstrom erst nach dem zweiten Synthesekreislauf abgeführt wird. Diese Mischform aus einer parallelen und einer sequentiellen Verschaltung wird dadurch erzielt, dass man den vereinten Gasstrom aus frischem Synthesegas und im Kreislauf geführten Gas des ersten Synthesekreislaufs vor dem ersten Ammoniaksynthesereaktor aufteilt und einen Teilstrom dem zweiten Synthesekreislauf zuführt. Aus dem zweiten Synthesekreislauf kann ein Purgegasstrom abgeführt werden. Dies entspricht dem oben erwähnten Teilstrom M, welcher aus dem System ausgeschleust wird.

Die Aufteilung ist die oben in dem Schritt d₁ genannte Aufteilung des Reaktionsgases in die beiden Teilströme D und E, wobei der erste Teilstrom D der ersten Ammoniaksyntheseeinheit zugeführt wird, die Teil des ersten Synthesekreislaufs ist, während der zweite Teilstrom E in einen zweiten Synthesekreislauf überführt, dort mit dem Kreislaufgas H aus dem zweiten Synthesekreislauf vermischt und dann der zweiten Ammoniaksyntheseeinheit zugeführt wird, die Teil des zweiten Synthesekreislaufs ist.

Anders als im Stand der Technik gemäß der oben erwähnten US-Schrift 4,568,531 erfolgt somit die Aufteilung in zwei Teilströme nicht nach der Reaktion in der ersten Ammoniaksyntheseeinheit, sondern vor dieser, so dass es sich in dieser Hinsicht um eine Verschaltung handelt, die auch Aspekte einer parallelen Verschaltung aufweist, denn in beiden Synthesekreisläufen kann die Synthese von Ammoniak parallel ablaufen. Außerdem wird anders als im Stand der Technik nicht nur ein an Ammoniak und auch den Eduktgasen abgereichertes Purgegasgemisch der zweiten Ammoniaksyntheseeinheit zugeführt, sondern ein Gasgemisch aus Kreislaufgas und frischem Synthesegas. Mit anderen Worten, der Teilstrom D, der der ersten Ammoniaksyntheseeinheit zugeführt wird und der Teilstrom E, der in den zweiten Synthesekreislauf überführt und der zweiten Ammoniaksyntheseeinheit zugeführt wird, können die gleiche Zusammensetzung hinsichtlich der im Gasgemisch enthaltenen Gase aufweisen. Dies hat den Vorteil, dass das gesamte Reaktionsgas C jeweils einer Ammoniaksyntheseeinheit zugeführt wird.

Gemäß einer bevorzugten Weiterbildung der Erfindung umfasst das Verfahren weiterhin den Schritt:
(b₁) Aufteilen des Synthesegases **A** in mindestens einen Teilstrom **A₁** und einen Teilstrom **A₂** und Vermischen des Teilstroms **A₁** mit einem im ersten Kreislauf geführten Gasgemisch **B** unter Erzeugung eines Reaktionsgases **C.**

Gemäß einer bevorzugten Weiterbildung der Erfindung umfasst das Verfahren weiterhin den Schritt:
(h₁) Vermischen des Teilstroms **E** mit dem Teilstrom **A₂** unter Bildung eines Teilstroms **E'** und Vermischen des Teilstroms **E'** mit zumindest einem Teil eines in einem zweiten Kreislauf geführten Gasgemischs **H** umfassend nicht umgesetzte Reaktanden, Produkt und ggf. inerte Komponenten unter Erzeugung eines Reaktionsgases **I.**

Ein zweiter Aspekt der Erfindung betrifft ein alternatives Verfahren zur Herstellung von Ammoniak, wobei das Verfahren die folgenden Schritte umfasst:
(a₂) Bereitstellen eines Synthesegases **A** umfassend die Reaktanden Stickstoff und Wasserstoff sowie gegebenenfalls Produkt und gegebenenfalls inerte Komponenten;
(b₂) Aufteilen des Synthesegases **A** in mindestens einen Teilstrom **A₁** und einen Teilstrom **A₂**;
(c₂) Vermischen des Teilstroms **A₁** mit einem Teilstrom **N** unter Erzeugung eines Reaktionsgases **C;**
(d₂) Synthese von Produkt aus Reaktanden, welche in dem Reaktionsgas **C** enthalten sind, in einer ersten Ammoniaksyntheseeinheit bei einem Druck P₁, unter Erzeugung eines Produktgases **F** umfassend nicht umgesetzte Reaktanden und Produkt und gegebenenfalls inerte Komponenten;
(e₂) Abtrennen von Produkt aus dem Produktgas **F** unter Erzeugung eines an Produkt abgereicherten Gasgemischs **G;**
(f₂) Rückführen des Gasgemischs **G** als im ersten Kreislauf geführtes Gasgemisch **B;**
(g₂) Aufteilen des Gasgemischs **B** in einen Teilstrom **E** und einen Teilstrom **N;**
(h₂) Vermischen des Teilstroms **E** mit dem Teilstrom **A₂** unter Bildung eines Teilstroms **E';**
(i₂) Vermischen des Teilstroms **E'** mit zumindest einem Teil eines in einem zweiten Kreislauf geführten Gasgemischs **H** umfassend nicht umgesetzte Reaktanden sowie gegebenenfalls Produkt und gegebenenfalls inerte Komponenten unter Erzeugung eines Reaktionsgases **I;**
(j₂) Synthese von Produkt aus Reaktanden, welche in dem Reaktionsgas I enthalten sind, in einer zweiten Ammoniaksyntheseeinheit bei einem Druck P₂, unter Erzeugung eines Produktgases **J** umfassend nicht umgesetzte Reaktanden und Produkt und gegebenenfalls inerte Komponenten;
(k₂) Abtrennen von Produkt aus dem Produktgas **J** unter Erzeugung eines an Produkt abgereicherten Gasgemischs **K;**
(l₂) Aufteilen des Gasgemischs **K** in mindestens einen Teilstrom **L** und einen Teilstrom **M,** und Rückführen zumindest eines Teils des Teilstroms **L** als im zweiten Kreislauf geführtes Gasgemisch **H** zu Schritt (i₂); und
(m₂) Ausschleusen des Teilstroms **M.**

Bevorzugt sind die Reaktanden Stickstoff und Wasserstoff im erforderlichen molaren Verhältnis von ca. 1:3 und die Syntheseeinheiten sind Ammoniaksyntheseeinheiten.

In den Schritten (a₁) und/oder (a₂) des erfindungsgemäßen Verfahrens wird ein Synthesegas **A** bereitgestellt, welches Reaktanden sowie ggf. Produkt und ggf. inerte Komponenten umfasst. Das Synthesegas kann aus unterschiedlichen Quellen stammen, wobei Erdgas als Quelle bevorzugt ist. Bezüglich der Einzelheiten zur Bereitstellung von Synthesegas wird beispielsweise vollumfänglich verwiesen auf A. Nielsen, I. Dybkjaer, Ammonia - Catalysis and Manufacture, Springer Berlin 1995, Kapitel 6, Seiten 202-326. Die inerten Komponenten sind dabei im Hinblick auf die Synthese des Produkts inert. Im Falle des bevorzugten Produkts Ammoniak umfassen die inerten Komponenten bevorzugt Edelgase, insbesondere Argon, sowie Kohlenwasserstoffe, insbesondere Methan.

Bevorzugt beträgt der Anteil an inerten Komponenten in dem Synthesegas **A** höchstens 15 Vol.-%, bevorzugter höchstens 12,5 Vol.-%, höchstens 10 Vol.-%, höchstens 7,5 Vol.-%, höchstens 5 vol.-%, höchstens 2,5 Vol.-% oder höchstens 2,0 Vol.-%.

Das Synthesegas **A** kann neben Wasserstoff und Stickstoff ggf. Methan, ggf. Argon und ggf. Spuren von Helium umfassen. In einer bevorzugten Ausführungsform wird das in den Schritten (a₁) und/oder (a₂) bereitgestellte Synthesegas **A** durch Reformierung von Kohlenwasserstoffen hergestellt, wobei die Reformierung in einem Dampfreformer oder in einem autothermen Reformer erfolgt. Bevorzugt wird bei der Reformierung Erdgas, Wasser in Form von Dampf und Luft bzw. Sauerstoff eingesetzt. Der volumenanteilige Hauptbestandteil des Gasgemischs ist bevorzugt Wasserstoff, wobei der Stickstoffanteil ggf. auch relativ hoch sein kann, abhängig davon, ob bei der Herstellung Luft, mit Sauerstoff angereicherte Luft oder sogar reiner Sauerstoff eingesetzt wurde.

Das in den Schritten (a₁) und/oder (a₂) bereitgestellte Synthesegas **A** kann bereits herkömmlichen Aufbereitungsmaßnahmen unterzogen worden sein, wie z.B. Heliumentfernung, Erdgasentschwefelung, Konvertierung von Kohlenmonoxid zu Kohlendioxid und Kohlendioxidwäsche. Auch nach Durchführung dieser Aufbereitungsmaßnahmen kann das Synthesegas **A** neben Wasserstoff und Stickstoff ggf. weitere, insbesondere inerte Komponenten umfassen.

Bevorzugt ist das Synthesegas **A** frisch, d.h. es ist bevorzugt zuvor aus keiner vorgeschalteten Kreislaufsynthese als Spülgasstrom ausgeschleust worden. Bevorzugt verläuft das Verfahren gemäß den Schritten (a₂) bis (m₂), wenn das frische Synthesegas **A** etwa den Synthesedruck P₂ aufweist.

In den Schritten (b₁) und/oder (b₂) des erfindungsgemäßen Verfahrens wird das Synthesegas **A** gegebenenfalls in einen Teilstrom **A₁** und einen Teilstrom **A₂** aufgeteilt. Die Zusammensetzung der Teilströme **A₁** und **A₂** ist daher erfindungsgemäß bevorzugt identisch. Bevorzugt ist der Volumenstrom und/oder der Massenstrom des Teilstroms **A₁** größer ist als der Volumenstrom bzw. der Massenstrom des Teilstroms **A₂**. In einer bevorzugten Ausführungsform liegt das Verhältnis vom Massenstrom des Teilstroms **A₁** zum Massenstrom des Teilstroms **A₂** im Bereich von 100:1 bis 1:1, bevorzugter im Bereich von 100:1 bis 5:1, im Bereich von 100:1 bis 10:1, im Bereich von 100:1 bis 20:1, im Bereich von 100:1 bis 30:1, im Bereich von 100:1 bis 40:1, im Bereich von 100:1 bis 50:1 oder im Bereich von 100:1 bis 60:1.

In den Schritten (c₁) und/oder (c₂) des erfindungsgemäßen Verfahrens wird das Synthesegas **A** bzw. der Teilstrom **A₁** mit einem im ersten Kreislauf geführten Gasgemisch **B** bzw. mit einem Teilstrom **N,** welche bevorzugt nicht umgesetzte Reaktanden sowie gegebenenfalls Produkt und gegebenenfalls inerte Komponenten umfassen, unter Erzeugung eines Reaktionsgases **C** vermischt. Bevorzugt ist der Volumenstrom und/oder der Massenstrom des Synthesegases **A** bzw. des Teilstroms **A₁** kleiner als der Volumenstrom bzw. der Massenstrom des Gasgemischs **B** und/oder des Teilstroms **N.**

Bevorzugt beträgt der relative Volumenanteil vom im ersten Kreislauf geführten Gas **B** und/oder vom Teilstrom **N** am Reaktionsgas **C** mindestens 50 Vol.-%, bevorzugter mindestens 60 Vol.-%, mindestens 70 Vol.-%, mindestens 80 Vol.-% oder mindestens 90 Vol.-%. Bevorzugt beträgt der relative Volumenanteil vom Synthesegas **A** bzw. vom Teilstrom **A₁** am Reaktionsgas **C** höchstens 49 Vol.-%, bevorzugter höchstens 40 Vol.-%, höchstens 30 Vol.-%, höchstens 20 Vol.-% oder höchstens 10 Vol.-%.

Das im ersten Kreislauf geführte Gasgemisch **B** und/oder der Teilstrom **N** können Produkt enthalten, welches zuvor nicht vollständig abgetrennt wurde, wodurch Produkt in das erzeugte Reaktionsgas **C** gelangen kann. Bevorzugt beträgt der relative Volumenanteil des Produkts am Reaktionsgas **C** höchstens 7,5 Vol.-%, bevorzugter höchstens 5,0 Vol.-%, noch bevorzugter höchstens 2,5 Vol.-% und insbesondere höchstens 1,5 Vol.-%.

Ein Fachmann erkennt, dass beim Anfahren des erfindungsgemäßen Verfahrens zur Herstellung eines Produkts noch kein Gasgemisch **B** und/oder kein Teilstrom **N** im Kreislauf geführt wird. Beim Anfahren des erfindungsgemäßen Verfahrens durchläuft das Synthesegas **A** bzw. der Teilstrom **A₁** den Schritt (c₁) und/oder (c₂) ohne Vermischen mit einem Gasgemisch **B** und/oder mit einem Teilstrom **N.** Dementsprechend umfasst das Reaktionsgas **C** beim Anfahren des Verfahrens noch kein Produkt. Sobald ein erster Teil des Synthesegases **A** bzw. des Teilstroms **A₁** die Schritte (d₁) bis (g₁) und/oder (d₂) bis (g₂) des erfindungsgemäßen Verfahrens durchlaufen hat, erfolgt das Verfahren vollständig nach den hier beschriebenen Schritten. In einer bevorzugten Ausführungsform ist dem erfindungsgemäßen Verfahren eine NH₃-Synthese vorgeschaltet. In diesem Fall enthält das Synthesegas A schon Produkt.

In den Schritten (d₁) und/oder (g₂) des erfindungsgemäßen Verfahrens wird das Reaktionsgas **C** in einen Teilstrom **D** und einen Teilstrom **E** aufgeteilt und/oder das Gasgemisch **B** in einen Teilstrom **E** und einen Teilstrom **N** aufgeteilt. Bevorzugt ist der Volumenstrom und/oder der Massenstrom des Teilstroms **D** und/oder des Teilstroms **N** größer als der Volumenstrom bzw. der Massenstrom des Teilstroms **E.** Wenn in der vorliegenden Anmeldung von einer Aufteilung des Reaktionsgases **C** beispielsweise in zwei Teilströme **D** und **E** die Rede ist, dann ist damit gemeint, dass vorzugsweise eine Aufteilung in zwei Teilströme **D** und **E** gleicher stofflicher Zusammensetzung vorgenommen wird, also nicht etwa eine Aufteilung durch einen Trennschritt, bei dem eine Auftrennung des Reaktionsgases C in mehrere Gasströme unterschiedlicher Zusammensetzung oder eine Abtrennung einzelner Komponenten aus dem Reaktionsgas erfolgt.

Bevorzugt beträgt der relative Volumenanteil vom Teilstrom **D** am Reaktionsgas **C** mindestens 70 Vol.-%, bevorzugter mindestens 80 Vol.-%, mindestens 90 Vol.-%, mindestens 95 Vol.-%, mindestens 96 Vol.-%, mindestens 97 Vol.-%, mindestens 98 Vol.-% oder mindestens 99 Vol.-%. Bevorzugt beträgt der relative Volumenanteil vom Teilstrom **E** am Reaktionsgas **C** höchstens 30 Vol.-%, bevorzugter höchstens 20 Vol.-%, höchstens 10 Vol.-%, höchstens 5 Vol.-%, höchstens 3 Vol.-%, höchstens 2 Vol.-% oder höchstens 1 Vol.-%. Die Aufteilung des Reaktionsgases **C** in die beiden Teilströme **D** und **E** gleicher Zusammensetzung kann somit beispielsweise so vorgenommen werden, dass der überwiegende Volumenanteil, ja gegebenenfalls der weitaus überwiegende Volumenanteil auf den Teilstrom **D** entfällt, welcher dem ersten Synthesekonverter zugeführt und nach der Reaktion im ersten Kreislauf geführt wird und nur ein geringerer Volumenanteil auf den Teilstrom **E** entfällt, welcher danach dem zweiten Synthesekonverter zugeführt und nach der Reaktion im zweiten Kreislauf geführt wird.

Bevorzugt liegt das Verhältnis vom Volumenstrom des Teilstroms **D** oder des Teilstroms **N** zum Volumenstrom des Teilstroms **E** im Bereich von 100:1 bis 1:1, bevorzugter im Bereich von 100:1 bis 5:1, im Bereich von 100:1 bis 10:1, im Bereich von 100:1 bis 20:1, im Bereich von 100:1 bis 30:1 oder im Bereich von 100:1 bis 40:1.

Der Teilstrom **D** durchläuft bevorzugt die Schritte (e₁) bis (g₁) und wird als im ersten Kreislauf geführtes Gasgemisch **B** zu Schritt (c₁) rückgeführt. In einer bevorzugten Ausführungsform beträgt das Volumenverhältnis des Teilstroms **D** zum Teilstrom **E** mindestens 1.1, bevorzugter mindestens 1.5, mindestens 2.0, mindestens 2.5, mindestens 3.0, mindestens 4.0, mindestens 5.0, mindestens 7.5, mindestens 10.0, mindestens 15.0, mindestens 20.0 oder mindestens 30.0.

In den Schritten (e₁) und/oder (d₂) des erfindungsgemäßen Verfahrens wird Produkt aus Reaktanden synthetisiert, welche in dem Teilstrom **D** und/oder im Reaktionsgas **C** enthalten sind, bei einem Druck P₁, unter Erzeugung eines Produktgases **F** umfassend nicht umgesetzte Reaktanden, Produkt und ggf. inerte Komponenten. Bevorzugt erfolgt die Synthese in einer Reaktionsvorrichtung unter heterogener Gaskatalyse bei unvollständigem Umsatz. Dementsprechend umfasst das Produktgas **F** sowohl Produkt als auch nicht-umgesetzte Reaktanden und ggf. inerte Komponenten. Die Synthese kann dabei in einem einzelnen Druckbehälter erfolgen, welcher ein einzelnes Katalysatorbett enthält, oder in mehreren, hintereinander geschalteten Druckbehältern, welche jeweils ein einzelnes Katalysatorbett enthalten. Ebenso kann die Synthese in einem einzelnen Druckbehälter erfolgen, welcher mehrere hintereinander geschaltete Katalysatorbetten umfasst. Darüber hinaus ist es auch möglich, dass die Synthese in mehreren, hintereinander geschalteten Druckbehältern erfolgt, welche jeweils mehrere hintereinander geschaltete Katalysatorbetten enthalten. Auch Mischungen dieser Varianten sind möglich.

In allen diesen Varianten erfolgt die Synthese bei einem Druck P₁. Bevorzugt liegt der Druck P₁ im Bereich von 50 bis 400 bara, bevorzugter im Bereich von 90 bis 300 bara oder im Bereich von 170 bis 230 bara.

Erfindungsgemäß umfasst jeder der Syntheseschritte gemäß e₁, j₁, d₂ und j₂ eine Vorwärmung des jeweiligen Eduktstroms (Teilstrom **D** bzw. Reaktionsgas **I** bzw. Reaktionsgas **C)** in mindestens einem Wärmetauscher auf eine Zündtemperatur von mindestens 300 °C, bevorzugt mindestens 380 °C.

Erfindungsgemäß umfasst jeder der Abtrennungsschritte gemäß f₁, k₁, e₂ und k₂
a. eine Abkühlung des jeweiligen Produktstroms (Produktgas **F** bzw. Produktgas **J)** in mindestens einem Wärmetauscher, bevorzugt
b. eine stufenweise Abkühlung des jeweiligen Produktstroms (Produktgas **F** bzw. Produktgas **J)** in mindestens zwei Wärmetauschern, besonders bevorzugt
c. eine stufenweise Abkühlung des jeweiligen Produktstroms (Produktgas **F** bzw. Produktgas **J)** in mindestens zwei Wärmetauschern auf 0 °C.

Reaktoren und Katalysatoren zur Gasphasenreaktion bei hohem Druck sind einem Fachmann bekannt. Im Hinblick auf die erfindungsgemäße Synthese von Ammoniak wird beispielsweise verwiesen auf A. Nielsen, I. Dybkjaer, Ammonia - Catalysis and Manufacture, Springer Berlin 1995, Kapitel 6, Seiten 202-326.

Durch die Synthese wird aus Reaktanden, welche in dem Teilstrom **D** und/oder im Reaktionsgas **C** enthalten sind, Produkt synthetisiert, wodurch das erzeugte Produktgas **F** Produkt umfasst. Bevorzugt liegt der relative Volumenanteil des Produkts am Produktgas **F** im Bereich von 5 bis 30 Vol.-%, bevorzugter im Bereich von 10 bis 25 Vol.-% oder im Bereich von 15 bis 25 Vol.-%.

Bevorzugt erfolgt die Synthese in den Schritten (e₁) und/oder (d₂) des erfindungsgemäßen Verfahrens in einem Maßstab, welcher eine Tagesproduktion von 2.000 t Produkt übersteigt. Bevorzugter beträgt die Tagesproduktion an Produkt in den Schritten (e₁) und/oder (d₂) mindestens 2.100 t, bevorzugter mindestens 2.200 t, mindestens 2.300 t, mindestens 2.400 t, mindestens 2.500 t, mindestens 2.600 t, mindestens 2.700 t oder mindestens 2.800 t.

In den Schritten (f₁) und/oder (e₂) des erfindungsgemäßen Verfahrens wird Produkt aus dem Produktgas **F** unter Erzeugung eines an Produkt abgereicherten Gasgemischs **G** in einer Abtrennvorrichtung abgetrennt. Bevorzugt umfasst die Abtrennung die Abkühlung und die Kondensierung des Produkts mit Hilfe einer geeigneten Vorrichtung, insbesondere mit Hilfe eines oder mehrerer Wärmetauschern mit Kühlmedium, und die anschließende Abtrennung des kondensierten Produkts vom Produktgas in einer oder mehreren geeigneten Separationsvorrichtungen. Das Gasgemisch **G** kann Produkt enthalten, welches zuvor nicht vollständig abgetrennt wurde. Bevorzugt beträgt der relative Volumenanteil des Produkts am Gasgemisch **G** höchstens 12.0 Vol.-%, bevorzugter höchstens 10,0 Vol.-%, bevorzugter höchstens 8,0 Vol.-%, bevorzugter höchstens 5,0 Vol.-% oder höchstens 2,5 Vol.-%.

In den Schritten (g₁) und/oder (f₂) des erfindungsgemäßen Verfahrens wird das Gasgemisch **G** als im ersten Kreislauf geführtes Gasgemisch **B** zu Schritt (c₁) und/oder (g₂) rückgeführt. Bevorzugt wird das Gasgemisch **G** vollständig als im ersten Kreislauf geführtes Gasgemisch **B** zu Schritt (c₁) und/oder (g₂) rückgeführt. Insbesondere wird in Schritt (g₁) und/oder (f₂) bevorzugt kein Spülgas ausgeschleust. Bevorzugt sind damit das Gasgemisch **G** und das im ersten Kreislauf geführte Gasgemisch **B** identisch. Grundsätzlich ist es möglich, dass dem Gasgemisch **B** auf dem Weg zur Rückführung zu Schritt (c₁) und/oder (g₂) weitere Gasströme zugemischt werden, so dass das Gasgemisch **B** dann das Gasgemisch **G** sowie weitere Gasströme umfasst. Bevorzugt wird das Gasgemisch G vor Rückführung zu Schritt (c₁) bzw. (g₂) verdichtet, um die Druckverluste im Synthesekreislauf zu kompensieren.

In den Schritten (h₁) und/oder (h₂) des erfindungsgemäßen Verfahrens wird ggf. der Teilstrom **E** mit dem Teilstrom **A₂** unter Bildung eines Teilstroms **E'** vermischt. Bevorzugt ist der Volumenstrom und/oder der Massenstrom des Teilstroms **E** größer als der Volumenstrom bzw. der Massenstrom des Teilstroms **A₂**. Bevorzugt beträgt der relative Volumenanteil vom Teilstrom **E** am Teilstrom **E'** mindestens 50 Vol.-%, bevorzugter mindestens 60 Vol.-%, mindestens 70 Vol.-%, mindestens 80 Vol.-% oder mindestens 90 Vol.-%. Bevorzugt beträgt der relative Volumenanteil vom Teilstrom **A₂** am Teilstrom **E'** höchstens 50 Vol.-%, bevorzugter höchstens 40 Vol.-%, höchstens 30 Vol.-%, höchstens 20 Vol.-% oder höchstens 10 Vol.-%.

In den Schritten (i₁) und/oder (i₂) des erfindungsgemäßen Verfahrens wird der Teilstrom **E** bzw. der Teilstrom **E'** mit zumindest einem Teil eines in einem zweiten Kreislauf geführten Gasgemischs **H** umfassend nicht umgesetzte Reaktanden sowie nicht abgetrenntes Produkt und gegebenenfalls inerte Komponenten unter Erzeugung eines Reaktionsgases **I** vermischt. Bevorzugt ist der Volumenstrom und/oder der Massenstrom des Teilstroms **E** bzw. des Teilstroms **E'** kleiner als der Volumenstrom bzw. der Massenstrom des Gasgemischs **H.** Bevorzugt beträgt der relative Volumenanteil vom Gasgemisch **H** am Reaktionsgas **I** mindestens 50 Vol.-%, bevorzugter mindestens 60 Vol.-%, mindestens 70 Vol.-%, mindestens 80 Vol.-% oder mindestens 90 Vol.-%. Bevorzugt beträgt der relative Volumenanteil vom Teilstrom **E** bzw. vom Teilstrom **E'** am Reaktionsgas **I** höchstens 50 Vol.-%, bevorzugter höchstens 40 Vol.-%, höchstens 30 Vol.-%, höchstens 20 Vol.-% oder höchstens 10 Vol.-%.

Ein Fachmann erkennt, dass beim Anfahren des erfindungsgemäßen Verfahrens zur Herstellung eines Produkts noch kein Gasgemisch **H** im Kreislauf geführt wird. Beim Anfahren des erfindungsgemäßen Verfahrens durchläuft der Teilstrom **E** bzw. der Teilstrom **E'** die Schritte (i₁) und/oder (i₂) ohne Vermischen mit einem Gasgemisch **H.** Sobald ein erster Teil des Teilstroms **E** bzw. des Teilstroms **E'** die Schritte (j₁) bis (l₁) und/oder (j₂) bis (l₂) des erfindungsgemäßen Verfahrens durchlaufen hat, erfolgt das Verfahren vollständig nach den hier beschriebenen Schritten.

In den Schritten (j₁) und/oder (j₂) des erfindungsgemäßen Verfahrens wird Produkt aus Reaktanden synthetisiert, welche in dem Reaktionsgas **I** enthalten sind, bei einem Druck P₂, unter Erzeugung eines Produktgases **J** umfassend nicht umgesetzte Reaktanden, Produkt und ggf. inerte Komponenten.

Bevorzugt erfolgt die Synthese unter heterogener Gaskatalyse bei unvollständigem Umsatz in einer Reaktionsvorrichtung. Dementsprechend umfasst das Produktgas **J** sowohl Produkt als auch nicht-umgesetzte Reaktanden und ggf. inerte Komponenten. Die Synthese kann dabei in einem einzelnen Druckbehälter erfolgen, welcher ein einzelnes Katalysatorbett enthält, oder in mehreren, hintereinander geschalteten Druckbehältern, welche jeweils ein einzelnes Katalysatorbett enthalten. Ebenso kann die Synthese in einem einzelnen Druckbehälter erfolgen, welcher mehrere hintereinander geschaltete Katalysatorbetten umfasst. Darüber hinaus ist es auch möglich, dass die Synthese in mehreren, hintereinander geschalteten Druckbehältern erfolgt, welche jeweils mehrere hintereinander geschaltete Katalysatorbetten enthalten. Auch Mischungen dieser Varianten sind möglich.

In allen diesen Varianten erfolgt die Synthese jedoch im Wesentlichen bei dem Druck P₂. Bevorzugt liegt der Druck P₂ im Bereich von 50 bis 400 bara, bevorzugter im Bereich von 90 bis 300 bara oder im Bereich von 170 bis 230 bara.

Erfindungsgemäß umfasst jeder der Syntheseschritte gemäß e₁, j₁, d₂ und j₂ eine Vorwärmung des jeweiligen Eduktstroms (Teilstrom **D** bzw. Reaktionsgas **I** bzw. Reaktionsgas **C)** in mindestens einem Wärmetauscher auf eine Zündtemperatur von mindestens 300 °C, bevorzugt mindestens 380 °C.

Erfindungsgemäß umfasst jeder der Abtrennungsschritte gemäß f₁, k₁, e₂ und k₂
a. eine Abkühlung des jeweiligen Produktstroms (Produktgas **F** bzw. Produktgas **J)** in mindestens einem Wärmetauscher, bevorzugt
b. eine stufenweise Abkühlung des jeweiligen Produktstroms (Produktgas **F** bzw. Produktgas **J)** in mindestens zwei Wärmetauschern, besonders bevorzugt
c. eine stufenweise Abkühlung des jeweiligen Produktstroms (Produktgas **F** bzw. Produktgas **J)** in mindestens zwei Wärmetauschern auf 0 °C.

Reaktoren und Katalysatoren zur Gasphasenreaktion bei hohem Druck sind einem Fachmann bekannt.

Durch die Synthese wird aus Reaktanden, welche in dem Reaktionsgas **I** enthalten sind, Produkt synthetisiert, wodurch das erzeugte Produktgas **J** Produkt umfasst. Bevorzugt liegt der relative Volumenanteil des Produkts am Produktgas **J** im Bereich von 5 bis 30 Vol.-%, bevorzugter im Bereich von 10 bis 25 Vol.-% oder im Bereich von 15 bis 25 Vol.-%.

Bevorzugt erfolgt die Synthese in den Schritten (j₁) und/oder (j₂) des erfindungsgemäßen Verfahrens in einem Maßstab, welcher eine Tagesproduktion von 100 t Produkt übersteigt. Bevorzugter beträgt die Tagesproduktion an Produkt in Schritt (j) mindestens 120 t, bevorzugter mindestens 140 t, mindestens 160 t, mindestens 180 t, mindestens 200 t, mindestens 220 t, mindestens 240 t, mindestens 260 t oder mindestens 300 t.

In einer bevorzugten Ausführungsform sind der Druck P₁ und der Druck P₂ im Wesentlichen gleich groß. In diesem Zusammenhang bedeutet *"im Wesentlichen gleich groß",* dass die Drücke um nicht mehr als 15% voneinander abweichen, bevorzugter um nicht mehr als 10%, um nicht mehr als 5 % oder um nicht mehr als 2%. Bevorzugt weicht der Druck P₂ relativ von Druck P₁ um nicht mehr als 20 bar. In einer bevorzugten Ausführungsform weicht Druck P₂ um nicht mehr als 10,0 bar relativ von Druck P₁ ab, bevorzugter um nicht mehr als 5 bar oder um nicht mehr als 2,5 bar. Bevorzugt sind der Druck P₁ und der Druck P₂ gleich groß. Dabei wird der Druck jeweils bevorzugt am Eingang der Reaktionsvorrichtung gemessen.

In den Schritten (k₁) und/oder (k₂) des erfindungsgemäßen Verfahrens wird in einer Abtrennvorrichtung Produkt aus dem Produktgas **J** unter Erzeugung eines an Produkt abgereicherten Gasgemischs **K** abgetrennt. Bevorzugt umfasst die Abtrennung die Abkühlung und die Kondensierung des Produkts mit Hilfe einer geeigneten Vorrichtung, insbesondere mit Hilfe eines oder mehrerer Wärmetauscher mit Kühlmedium, und die anschließende Abtrennung des kondensierten Produkts vom Produktgas in einer oder mehreren geeigneten Separationsvorrichtungen. Das Gasgemisch **K** kann Produkt enthalten, welcher zuvor nicht vollständig abgetrennt wurde. Bevorzugt beträgt der relative Volumenanteil des Produkts am Gasgemisch **K** höchstens 12,0 Vol.-%, bevorzugter höchstens 10,0 Vol.-%, bevorzugter höchstens 8,0 Vol.-% oder höchstens 5,0 Vol.-%.

In den Schritten (l₁) und/oder (l₂) des erfindungsgemäßen Verfahrens wird das Gasgemisch **K** in mindestens einen Teilstrom **L** und einen Teilstrom **M** aufgeteilt, und zumindest ein Teil des Teilstroms **L** wird als im zweiten Kreislauf geführtes Gasgemisch **H** zu Schritt (i₁) und/oder (i₂) rückgeführt. Bevorzugt ist der Volumenstrom und/oder der Massenstrom des Teilstroms **L** größer als der Volumenstrom bzw. der Massenstrom des Teilstroms **M.**

Bevorzugt beträgt der relative Volumenanteil vom Teilstrom **L** am Gasgemisch **K** mindestens 80 Vol.-%, bevorzugter mindestens 85 Vol.-%, mindestens 90 Vol.-%, mindestens 95 Vol.-% oder mindestens 99 vol.-%. Bevorzugt beträgt der relative Volumenanteil vom Teilstrom **M** am Gasgemisch **K** höchstens 20 Vol.-%, bevorzugter höchstens 15 Vol.-%, höchstens 10 Vol.-%, höchstens 5 Vol.-% oder höchstens 1 Vol.-%.

Bevorzugt wird der Teilstrom **L** vollständig als im zweiten Kreislauf geführtes Gasgemisch **H** zu Schritt (i₁) und/oder (i₂) rückgeführt. Bevorzugt sind damit der Teilstrom **L** und das im zweiten Kreislauf geführte Gasgemisch **H** identisch. Grundsätzlich ist es möglich, dass dem Teilstrom **L** auf dem Weg zur Rückführung zu Schritt (i₁) und/oder (i₂) weitere Ströme zugemischt werden, so dass das Gasgemisch **H** dann den Teilstrom **L** sowie weitere Ströme umfasst. Bevorzugt wird das Gasgemisch L vor Rückführung zu Schritt (i₁) bzw. (i₂) verdichtet, um die Druckverluste im Synthesekreislauf zu kompensieren.

In den Schritten (m₁) und/oder (m₂) des erfindungsgemäßen Verfahrens wird der Teilstrom **M** ausgeschleust. Die in dem Teilstrom **M** ggf. enthaltenden inerten Komponenten werden auf diese Weise dem Gesamtprozess entzogen, wodurch die Anreicherung von inerten Komponenten im Gesamtsystem begrenzt werden kann. Somit handelt es sich bei dem ausgeschleusten Teilstrom M um einen Purgegasstrom.

Die Schritte (a₁) bis (m₁) und/oder (a₂) bis (m₂) des erfindungsgemäßen Verfahrens verlaufen bevorzugt sequentiell und/oder parallel. Das erfindungsgemäße Verfahren wird bevorzugt kontinuierlich betrieben.

Bei dem erfindungsgemäßen Verfahren zur Herstellung eines Produkts kommen Druckverluste vor. Solche Druckverluste treten insbesondere bei der Durchströmung des Katalysators und der Wärmetauscher auf, oder durch Verwirbelungen an weiteren Einbauten bzw. im gesamten Verfahren durch Rohrreibungen bedingt sein. Bevorzugt müssen daher einzelne Gasströme innerhalb des erfindungsgemäßen Verfahrens verdichtet werden.

In einer bevorzugten Ausführungsform wird das in den Schritten (a₁) und/oder (a₂) bereitgestellte Synthesegas **A** bzw. der in den Schritten (b₁) und/oder (b₂) gebildete Teilstrom **A₁** bzw. das in den Schritten (c₁) und/oder (c₂) erzeugte Reaktionsgas **C** vor der Synthese von Produkt in den Schritten (e₁) und/oder (d₂) auf einen Druck von mindestens 100 bara verdichtet, bevorzugter auf einen Druck von mindestens 120 bara, mindestens 140 bara, mindestens 160 bara oder mindestens 170 bara. Bei dieser Ausführungsform kann ggf. in Schritt (a₁) und/oder (a₂) das Synthesegas **A** bei einem geringeren Druck als dem Druck P₁ bereitgestellt werden. Geeignete Verdichter, welche in dem erfindungsgemäßen Verfahren zum Verdichten eines Gasgemischs verwendet werden können, sind einem Fachmann bekannt.

In einer anderen bevorzugten Ausführungsform wird das in den Schritten (i₁) und/oder (i₂) erzeugte Reaktionsgas **I** vor der Synthese von Produkt in Schritt (j₁) und/oder (j₂) auf einen Druck von mindestens 100 bara verdichtet wird, bevorzugter auf einen Druck von mindestens 120 bara, mindestens 140 bara, mindestens 160 bara oder mindestens 170 bara.

In einer weiteren bevorzugten Ausführungsform wird das im zweiten Kreislauf geführte Gasgemisch **H** vor dem Vermischen mit dem Teilstrom **E** bzw. dem Teilstrom **E'** in den Schritten (i₁) und/oder (i₂) auf einen Druck von mindestens 100 bara verdichtet, bevorzugter auf einen Druck von mindestens 120 bara, mindestens 140 bara, mindestens 160 bara oder mindestens 170 bara.

Bevorzugt erfolgt die Gesamtsynthese durch das erfindungsgemäße Verfahren in einem Maßstab, welcher eine Tagesproduktion von 2.300 t Produkt übersteigt. Bevorzugt beträgt die Tagesproduktion an Produkt mindestens 2.400 t, bevorzugter mindestens 2.500 t, mindestens 2.600 t, mindestens 3.000 t, mindestens 3.500 t, mindestens 4.000 t oder mindestens 4.500 t.

Es wurde überraschend gefunden, dass durch die Strömungsführung der Gasströme in dem erfindungsgemäßen Verfahren, insbesondere
a. durch das vollständige Rückführen des Gasgemischs **G** als im ersten Kreislauf geführtes Gasgemisch **B** zu Schritt (c₁) und/oder zu Schritt (g₂) ohne Ausschleusen eines Spülstroms;
b. und durch das Aufteilen des Reaktionsgases **C** in zwei Teilströme **D** und **E** und/oder durch das Aufteilen des Gasgemischs **B** in zwei Teilströme **N** und **E,** welche jeweils in einen separaten Reaktionszyklus eingeleitet werden,

mehr Produkt bei gleichem Durchsatz ermöglicht wird als bei einer im Stand der Technik bekannten Verschaltung von zwei Synthesekreisläufen, wie sie beispielsweise in DD 225 029 beschrieben wird.

Ein dritter Aspekt der Erfindung betrifft eine Vorrichtung zur Herstellung eines Produkts umfassend die folgenden miteinander in Wirkverbindung stehenden Komponenten:
(A₁) eine erste Mischvorrichtung konfiguriert zum Vermischen eines Synthesegases **A** bzw. eines Teilstroms **A₁** mit zumindest einem Teil eines in einem ersten Kreislauf geführten Gasgemischs **B** unter Erzeugung eines Reaktionsgases **C;**
(B₁) eine erste Aufteilvorrichtung, konfiguriert zum Aufteilen des Reaktionsgases **C** in einen Teilstrom **D** und einen Teilstrom **E;**
(C₁) eine erste Reaktionsvorrichtung umfassend mindestens einen Wärmetauscher, konfiguriert zur Synthese von Produkt aus Reaktanden, welche in dem Teilstrom **D** enthalten sind, unter Erzeugung eines Produktgases **F;**
(D₁) eine erste Abtrennvorrichtung umfassend mindestens einen Wärmetauscher, konfiguriert zum Abtrennen von Produkt aus dem Produktgas **F** unter Erzeugung eines an Produkt abgereicherten Gasgemischs **G;**
(E₁) Mittel konfiguriert zum Rückführen des Gasgemischs **G** als im ersten Kreislauf geführtes Gasgemisch **B** zur ersten Mischvorrichtung;
(F₁) gegebenenfalls eine weitere Aufteilvorrichtung, konfiguriert zum Aufteilen des Synthesegases **A** in mindestens einen Teilstrom **A₁** und einen Teilstrom **A₂**;
(G₁) gegebenenfalls eine weitere Mischvorrichtung, konfiguriert zum Vermischen des Teilstroms **E** mit dem Teilstrom **A₂** unter Erzeugung eines Teilstroms **E';**
(H₁) eine zweite Mischvorrichtung, konfiguriert zum Vermischen des Teilstroms **E** bzw. des Teilstroms **E'** mit zumindest einem Teil eines in einem zweiten Kreislauf geführten Gasgemischs **H** unter Erzeugung eines Reaktionsgases **I;**
(l₁) eine weitere Reaktionsvorrichtung umfassend mindestens einen Wärmetauscher, konfiguriert zur Synthese von Produkt aus Reaktanden, welche in dem Reaktionsgas **I** enthalten sind, unter Erzeugung eines Produktgases **J;**
(J₁) eine weitere Abtrennvorrichtung umfassend mindestens einen Wärmetauscher, konfiguriert zum Abtrennen von Produkt aus dem Produktgas **J** unter Erzeugung eines Gasgemischs **K;**
(K₁) eine zweite Aufteilvorrichtung, konfiguriert zum Aufteilen des Gasgemischs **K** in mindestens einen Teilstrom **L** und einen Teilstrom **M;**
(L₁) Mittel konfiguriert zum Rückführen des Teilstroms **L** als im zweiten Kreislauf geführtes Gasgemisch **H** zur zweiten Mischvorrichtung; und
(M₁) Mittel konfiguriert zum Ausschleusen von Teilstrom **M.**

Ein vierter Aspekt der Erfindung betrifft eine Vorrichtung zur Herstellung eines Produkts umfassend die folgenden miteinander in Wirkverbindung stehenden Komponenten:
(A₂) eine erste Mischvorrichtung konfiguriert zum Vermischen eines Teilstroms **A₁** mit einem Teilstrom **N** unter Erzeugung eines Reaktionsgases **C;**
(B₂) eine erste Reaktionsvorrichtung umfassend mindestens einen Wärmetauscher, konfiguriert zur Synthese von Produkt aus Reaktanden, welche in dem Reaktionsgas **C** enthalten sind, unter Erzeugung eines Produktgases **F;**
(C₂) eine erste Abtrennvorrichtung umfassend mindestens einen Wärmetauscher, konfiguriert zum Abtrennen von Produkt aus dem Produktgas **F** unter Erzeugung eines an Produkt abgereicherten Gasgemischs **G;**
(D₂) Mittel konfiguriert zum Rückführen des Gasgemischs **G** als im ersten Kreislauf geführtes Gasgemisch **B;**
(E₂) eine erste Aufteilvorrichtung, konfiguriert zum Aufteilen des Gasgemischs **B** in einen Teilstrom **E** und einen Teilstrom **N;**
(F₂) eine weitere Aufteilvorrichtung, konfiguriert zum Aufteilen des Synthesegases **A** in mindestens einen Teilstrom **A₁** und einen Teilstrom **A₂**;
(G₂) eine weitere Mischvorrichtung, konfiguriert zum Vermischen des Teilstroms **E** mit dem Teilstrom **A₂** unter Erzeugung eines Teilstroms **E';**
(H₂) eine zweite Mischvorrichtung, konfiguriert zum Vermischen des Teilstroms **E'** mit zumindest einem Teil eines in einem zweiten Kreislauf geführten Gasgemischs **H** unter Erzeugung eines Reaktionsgases **I;**
(l₂) eine weitere Reaktionsvorrichtung umfassend mindestens einen Wärmetauscher, konfiguriert zur Synthese von Produkt aus Reaktanden, welche in dem Reaktionsgas **I** enthalten sind, unter Erzeugung eines Produktgases **J;**
(J₂) eine weitere Abtrennvorrichtung umfassend mindestens einen Wärmetauscher, konfiguriert zum Abtrennen von Produkt aus dem Produktgas **J** unter Erzeugung eines Gasgemischs **K;**
(K₂) eine zweite Aufteilvorrichtung, konfiguriert zum Aufteilen des Gasgemischs **K** in mindestens einen Teilstrom **L** und einen Teilstrom **M;**
(L₂) Mittel konfiguriert zum Rückführen des Teilstroms **L** als im zweiten Kreislauf geführtes Gasgemisch **H** zur zweiten Mischvorrichtung; und
(M₂) Mittel konfiguriert zum Ausschleusen von Teilstrom **M.**

Bevorzugt verläuft das Verfahren in der Vorrichtung umfassend die miteinander in Wirkverbindung stehenden Komponenten (A₂) bis (M₂), wenn das frische Synthesegas **A** etwa den Synthesedruck P₁ aufweist.

Die Komponenten der erfindungsgemäßen Vorrichtung stehen miteinander in Wirkverbindung, d.h. sind durch geeignete Rohrleitungen etc. miteinander in einer Weise verbunden, welche die allgemeine Funktionsfähigkeit der Vorrichtung gewährleistet. Die dafür erforderlichen Maßnahmen sind einem Fachmann bekannt.

Alle bevorzugten Ausführungsformen, welche vorstehend im Zusammenhang mit dem erfindungsgemäßen Verfahren beschrieben wurden, gelten analog auch für die erfindungsgemäße Vorrichtung und werden daher nicht wiederholt.

In einer weiteren bevorzugten Ausführungsform umfasst die erfindungsgemäße Vorrichtung gemäß der Komponenten (A₁) bis (M₁) weiterhin:
(R₁) einen ersten Verdichter, welcher
   vor der ersten Mischvorrichtung angeordnet ist, konfiguriert zum Verdichten des Synthesegases **A** bzw. des Teilstroms **A₁** etwa auf einen Druck P₁;
   oder
   nach der ersten Mischvorrichtung angeordnet ist, konfiguriert zum Verdichten des Reaktionsgases **C** etwa auf einen Druck P₁; und/oder
(S₁) einen zweiten Verdichter, welcher
   nach der zweiten Aufteilvorrichtung und vor der zweiten Mischvorrichtung angeordnet ist, konfiguriert zum Verdichten des Gasgemischs **H** etwa auf einen Druck P₂;
   oder
   nach der zweiten Mischvorrichtung angeordnet ist, konfiguriert zum Verdichten des Reaktionsgases **I** etwa auf einen Druck P₂.

In einer weiteren bevorzugten Ausführungsform umfasst die erfindungsgemäße Vorrichtung gemäß der Komponenten (A₂) bis (M₂) weiterhin:
(R₂) einen ersten Verdichter, welcher
   vor der ersten Aufteilvorrichtung angeordnet ist, konfiguriert zum Verdichten des Gasgemischs **B** etwa auf einen Druck P₁;
   oder
   nach der ersten Mischvorrichtung angeordnet ist, konfiguriert zum Verdichten des Teilstroms **N** etwa auf einen Druck P₁; und/oder
(S₂) einen zweiten Verdichter, welcher
   nach der zweiten Aufteilvorrichtung und vor der zweiten Mischvorrichtung angeordnet ist, konfiguriert zum Verdichten des Gasgemischs **H** etwa auf einen Druck P₂;
   oder
   nach der zweiten Mischvorrichtung angeordnet ist, konfiguriert zum Verdichten des Reaktionsgases **I** etwa auf einen Druck P₂.

Erfindungsgemäß entsprechen die Passagen *"etwa auf einen Druck P₁"* und *"etwa auf einen Druck P₂"* möglichen Druckschwankungen von mindestens 1 bis 2 bar. Da es vorrichtungsbedingt, beispielsweise durch Rohrleitungen und Wärmetauscher, zwischen Verdichter und nachfolgender Reaktionsvorrichtung zu Druckverlusten kommt, erfolgt die Verdichtung erfindungsgemäß auf "*P*₁ *und P*₂ *plus mindestens 1 bis 2 bar",* um einen Druck von P₁ bzw. P₂ an der entsprechenden Reaktionsvorrichtung zu erreichen.

In einer bevorzugten Ausführungsform sind der Druck P₁ und der Druck P₂ im Wesentlichen gleich groß. Dabei bedeutet *"im Wesentlichen gleich groß",* dass die Drücke um nicht mehr als 10% voneinander abweichen, bevorzugter um nicht mehr als 5%, um nicht mehr als 2 % oder um nicht mehr als 1%.

Die erfindungsgemäße Vorrichtung eignet sich in besonderer Weise zur Durchführung des erfindungsgemäßen Verfahrens. Ein weiterer Aspekt der Erfindung betrifft daher die Verwendung der erfindungsgemäßen Vorrichtung in dem erfindungsgemäßen Verfahren.

Die Erfindung wird anhand der Figuren beispielhaft illustriert. Ein Fachmann erkennt, dass bei einer erfindungsgemäßen Vorrichtung nicht zwingend alle abgebildeten Merkmale gleichzeitig verwirklicht sein müssen.

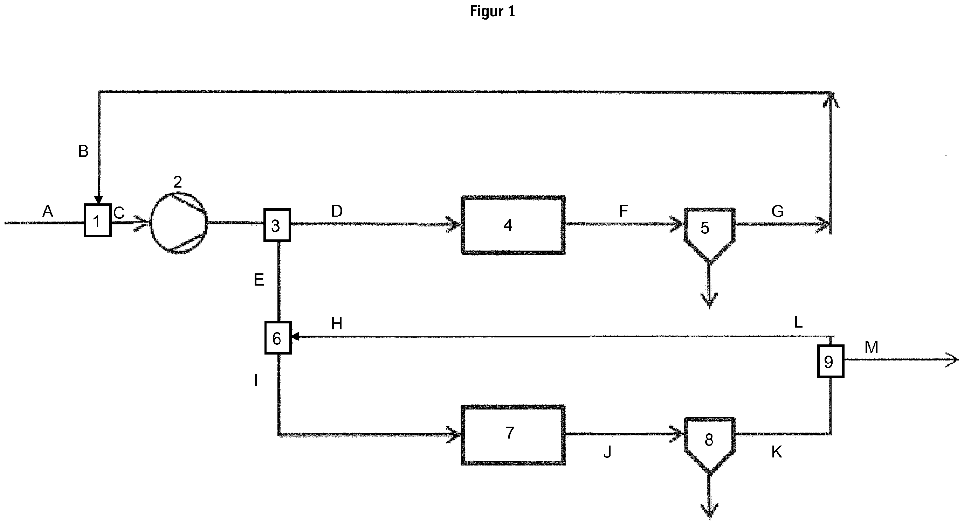

Figur 1 illustriert eine erfindungsgemäße Vorrichtung, mit deren Hilfe das erfindungsgemäße Verfahren gemäß Schritten (a₁) bis (m₁) durchgeführt werden kann. Zunächst wird ein frisches Synthesegas **A** bereitgestellt, welches Reaktanden sowie ggf. Produkt und ggf. inerte Komponenten umfasst. In der ersten Mischvorrichtung (1) wird das Synthesegas **A** mit zumindest einem Teil eines in einem ersten Kreislauf geführten Gasgemischs **B** unter Erzeugung eines Reaktionsgases **C** vermischt. Bevorzugt wird das Reaktionsgas **C** in einem Verdichter (2), welcher bevorzugt hinter der ersten Mischvorrichtung (1) angeordnet ist, etwa auf einen Druck P₁ verdichtet. Das Reaktionsgas **C** wird in einer ersten Aufteilvorrichtung (3) in einen Teilstrom **D** und einen Teilstrom **E** aufgeteilt. In einer ersten Reaktionsvorrichtung (4) wird Produkt aus Reaktanden synthetisiert, welche in dem Teilstrom **D** enthalten sind, bei einem Druck P₁, unter Erzeugung eines Produktgases **F** umfassend nicht umgesetzte Reaktanden, Produkt und ggf. inerte Komponenten. In einer ersten Abtrennvorrichtung (5) wird Produkt aus dem Produktgas **F** abgetrennt unter Erzeugung eines an Produkt abgereicherten Gasgemischs **G.** Das Gasgemisch **G** wird als im ersten Kreislauf geführtes Gasgemisch **B** zur Mischvorrichtung (1) rückgeführt und dort mit dem Synthesegas **A** vermischt. Teilstrom **E** wird in einer zweiten Mischvorrichtung (6) mit zumindest einem Teil eines in einem zweiten Kreislauf geführten Gasgemischs **H** umfassend nicht umgesetzte Reaktanden unter Erzeugung eines Reaktionsgases **I** vermischt. In einer weiteren Reaktionsvorrichtung (7) wird Produkt aus Reaktanden synthetisiert, welche in dem Reaktionsgas **I** enthalten sind, bei einem Druck P₂, unter Erzeugung eines Produktgases **J** umfassend nicht umgesetzte Reaktanden, Produkt und ggf. inerte Komponenten. In einer weiteren Abtrennvorrichtung (8) wird Produkt aus dem Produktgas **J** abgetrennt unter Erzeugung eines an Produkt abgereicherten Gasgemischs **K.** In einer zweiten Aufteilvorrichtung (9) wird das Gasgemisch **K** in mindestens einen Teilstrom **L** und einen Teilstrom **M** aufgeteilt. Der Teilstrom **L** wird als im zweiten Kreislauf geführtes Gasgemisch **H** zur zweiten Mischvorrichtung (6) rückgeführt und dort mit dem Teilstrom **E** vermischt. Der Teilstrom **M** wird zusammen mit den ggf. darin enthaltenen inerten Komponenten aus dem System ausgeschleust. Ggf. wird das Reaktionsgas **I** oder das Gasgemisch **H** in einem weiteren Verdichter etwa auf einen Druck P₂ verdichtet.

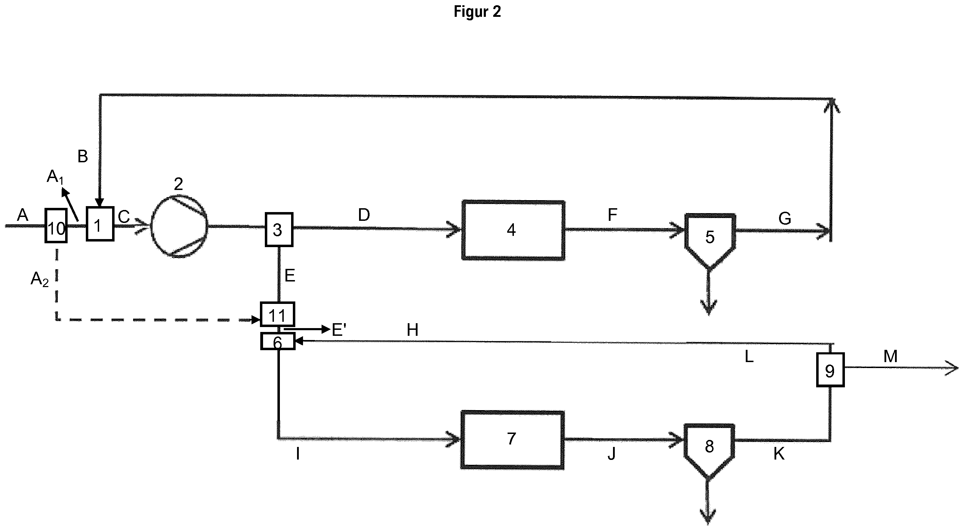

Figur 2 illustriert eine bevorzugte Variante der in Figur 1 gezeigten erfindungsgemäßen Vorrichtung. Das Synthesegas **A** wird in einer weiteren Aufteilvorrichtung (10) in mindestens einen Teilstrom **A₁** und einen Teilstrom **A₂** aufgeteilt. Der Teilstrom **A₁** wird in der ersten Mischvorrichtung (1) mit zumindest einem Teil des in einem ersten Kreislauf geführten Gasgemischs **B** unter Erzeugung eines Reaktionsgases **C** vermischt. Der Teilstrom **A₂** wird in einer weiteren Mischvorrichtung (11) mit dem Teilstrom **E** unter Bildung eines Teilstroms **E'** vermischt. Der Teilstrom **E'** wird in der zweiten Mischvorrichtung (6) mit zumindest einem Teil eines in einem zweiten Kreislauf geführten Gasgemischs **H** umfassend nicht umgesetzte Reaktanden unter Erzeugung eines Reaktionsgases **I** vermischt.

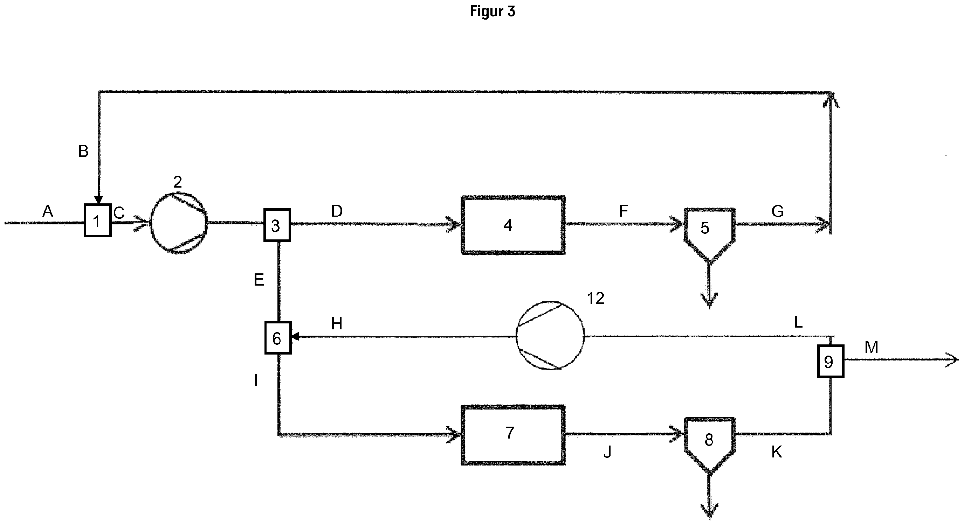

Figur 3 illustriert eine bevorzugte Variante der in Figur 1 gezeigten erfindungsgemäßen Vorrichtung. Die Vorrichtung umfasst einen ersten Verdichter (2), welcher nach der ersten Mischvorrichtung (1) angeordnet ist, konfiguriert zum Verdichten des Reaktionsgases **C** etwa auf einen Druck P₁, und einen zweiten Verdichter (12), welcher nach der zweiten Aufteilvorrichtung (9) und vor der zweiten Mischvorrichtung (6) angeordnet ist, konfiguriert zum Verdichten des Gasgemischs **H** etwa auf einen Druck P₂.

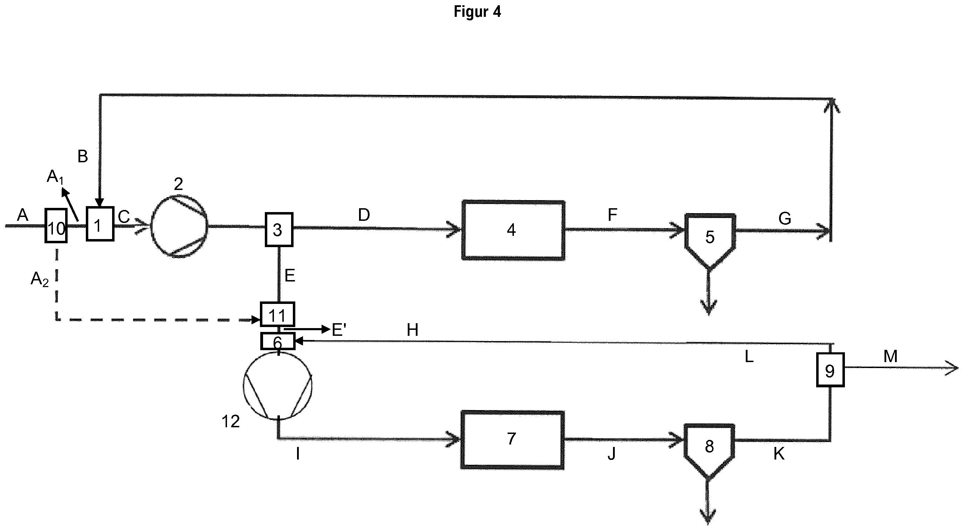

Figur 4 illustriert eine bevorzugte Variante der in Figur 2 gezeigten erfindungsgemäßen Vorrichtung. Die Vorrichtung umfasst einen ersten Verdichter (2), welcher nach der ersten Mischvorrichtung (1) angeordnet ist, konfiguriert zum Verdichten des Reaktionsgases **C** etwa auf einen Druck P₁, und einen zweiten Verdichter (12), welcher nach der zweiten Mischvorrichtung (6) angeordnet ist, konfiguriert zum Verdichten des Reaktionsgases I etwa auf einen Druck P₂.

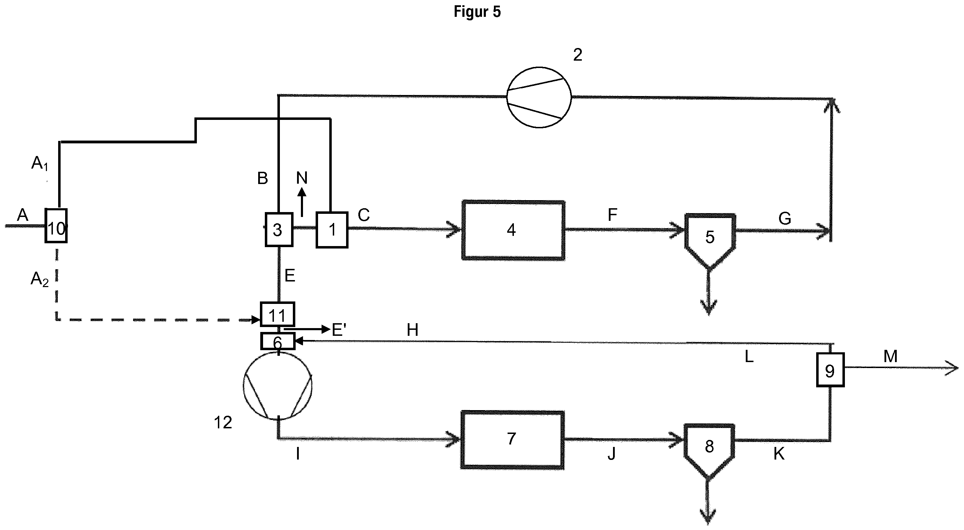

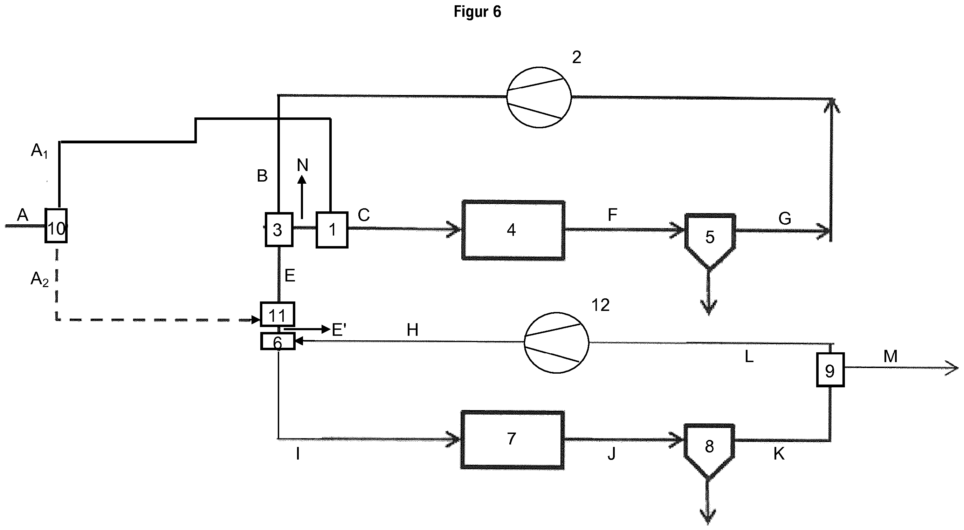

Figuren 5 und 6 illustrieren eine erfindungsgemäße Vorrichtung, mit deren Hilfe das erfindungsgemäße Verfahren gemäß Schritten (a₂) bis (m₂) durchgeführt werden kann. Das Synthesegas **A** wird in einer weiteren Aufteilvorrichtung (10) in mindestens einen Teilstrom **A₁** und einen Teilstrom **A₂** aufgeteilt. Der Teilstrom **A₁** wird in der ersten Mischvorrichtung (1) mit zumindest einem Teil eines Teilstroms **N** unter Erzeugung eines Reaktionsgases **C** vermischt. Der Teilstrom **A₂** wird in einer weiteren Mischvorrichtung (11) mit dem Teilstrom **E** unter Bildung eines Teilstroms **E'** vermischt. Der Teilstrom **E'** wird in der zweiten Mischvorrichtung (6) mit zumindest einem Teil eines in einem zweiten Kreislauf geführten Gasgemischs **H** umfassend nicht umgesetzte Reaktanden unter Erzeugung eines Reaktionsgases **I** vermischt.

Figur 5 umfasst einen ersten Verdichter (2), welcher vor der ersten Aufteilvorrichtung (3) angeordnet ist, konfiguriert zum Verdichten des Gasgemischs **B** etwa auf einen Druck P₁ und einen zweiten Verdichter (12), welcher nach der zweiten Mischvorrichtung (6) angeordnet ist, konfiguriert zum Verdichten des Reaktionsgases I etwa auf einen Druck P₂.

Figur 6 umfasst einen ersten Verdichter (2), welcher vor der ersten Aufteilvorrichtung (3) angeordnet ist, konfiguriert zum Verdichten des Gasgemischs **B** etwa auf einen Druck P₁ und einen zweiten Verdichter (12), welcher nach der zweiten Aufteilvorrichtung (9) und vor der zweiten Mischvorrichtung (6) angeordnet ist, konfiguriert zum Verdichten des Gasgemischs **H** etwa auf einen Druck P₂.

### Bezugszeichenliste:

- 1: erste Mischvorrichtung
- 2: erster Verdichter
- 3: erste Aufteilvorrichtung
- 4: erste Reaktionsvorrichtung
- 5: erste Abtrennvorrichtung
- 6: zweite Mischvorrichtung
- 7: weitere Reaktionsvorrichtung
- 8: weitere Abtrennvorrichtung
- 9: zweite Aufteilvorrichtung
- 10: weitere Aufteilvorrichtung
- 11: weitere Mischvorrichtung
- 12: zweiter Verdichter

## Patentansprüche

1. Verfahren zur Herstellung von Ammoniak, wobei das Verfahren die folgenden Schritte umfasst:
(a₁) Bereitstellen eines Synthesegases **A** umfassend die Reaktanden Stickstoff und Wasserstoff sowie gegebenenfalls Produkt und gegebenenfalls inerte Komponenten;
(c₁) Vermischen des Synthesegases **A** mit einem in einem ersten Kreislauf geführten Gasgemisch **B** unter Erzeugung eines Reaktionsgases **C;**
(d₁) Aufteilen des Reaktionsgases **C** in einen Teilstrom **D** und einen Teilstrom **E;**
(e₁) Synthese von Produkt aus den Reaktanden, welche in dem Teilstrom **D** enthalten sind, in einer ersten Ammoniaksyntheseeinheit (4), bei einem Druck P₁, unter Erzeugung eines Produktgases **F** umfassend nicht umgesetzte Reaktanden und Produkt sowie gegebenenfalls inerte Komponenten;
(f₁) Abtrennen von Produkt aus dem Produktgas **F** unter Erzeugung eines an Produkt abgereicherten Gasgemischs **G;**
(g₁) Rückführen des Gasgemischs **G** als im ersten Kreislauf geführtes Gasgemisch **B** zu Schritt (c₁);
(i₁) Vermischen des Teilstroms **E** mit zumindest einem Teil eines in einem zweiten Kreislauf geführten Gasgemischs **H** umfassend nicht umgesetzte Reaktanden, Produkt und gegebenenfalls inerte Komponenten unter Erzeugung eines Reaktionsgases **I;**
wobei nach der Aufteilung des Reaktionsgases in die beiden Teilströme D und E der erste Teilstrom **D** der ersten Ammoniaksyntheseeinheit (4) zugeführt wird, die Teil des ersten Synthesekreislaufs ist, während der zweite Teilstrom **E** in einen zweiten Synthesekreislauf überführt, dort mit dem Kreislaufgas **H** aus dem zweiten Synthesekreislauf vermischt und dann einer zweiten Ammoniaksyntheseeinheit (7) zugeführt wird, die Teil des zweiten Synthesekreislaufs ist;
(j₁) Synthese von Produkt aus Reaktanden, welche in dem Reaktionsgas **I** enthalten sind, in der zweiten Ammoniaksyntheseeinheit, bei einem Druck P₂, unter Erzeugung eines Produktgases **J** umfassend nicht umgesetzte Reaktanden und Produkt sowie gegebenenfalls inerte Komponenten;
(k₁) Abtrennen von Produkt aus dem Produktgas **J** unter Erzeugung eines an Produkt abgereicherten Gasgemischs **K;**
(l₁) Aufteilen des Gasgemischs **K** in mindestens einen Teilstrom **L** und einen Teilstrom **M,** und Rückführen zumindest eines Teils des Teilstroms **L** als im Kreislauf geführtes Gasgemisch **H** zu Schritt (i₁); und
(m₁) Ausschleusen des Teilstroms **M.**

2. Verfahren zur Herstellung von Ammoniak, wobei das Verfahren die folgenden Schritte umfasst:
(a₂) Bereitstellen eines Synthesegases **A** umfassend die Reaktanden Stickstoff und Wasserstoff sowie gegebenenfalls Produkt und gegebenenfalls inerte Komponenten;
(b₂) Aufteilen des Synthesegases **A** in mindestens einen Teilstrom **A₁** und einen Teilstrom **A₂**;
(c₂) Vermischen des Teilstroms **A₁** mit einem Teilstrom **N** unter Erzeugung eines Reaktionsgases **C;**
(d₂) Synthese von Produkt aus Reaktanden, welche in dem Reaktionsgas **C** enthalten sind, in einer ersten Ammoniaksyntheseeinheit bei einem Druck P₁, unter Erzeugung eines Produktgases **F** umfassend nicht umgesetzte Reaktanden und Produkt sowie gegebenenfalls inerte Komponenten;
(e₂) Abtrennen von Produkt aus dem Produktgas **F** unter Erzeugung eines an Produkt abgereicherten Gasgemischs **G;**
(f₂) Rückführen des Gasgemischs **G** als im ersten Kreislauf geführtes Gasgemisch **B;**
(g₂) Aufteilen des Gasgemischs **B** in einen Teilstrom **E** und einen Teilstrom **N;**
(h₂) Vermischen des Teilstroms **E** mit dem Teilstrom **A₂** unter Bildung eines Teilstroms **E';**
(i₂) Vermischen des Teilstroms **E'** mit zumindest einem Teil eines in einem zweiten Kreislauf geführten Gasgemischs **H** umfassend nicht umgesetzte Reaktanden, Produkt und gegebenenfalls inerte Komponenten unter Erzeugung eines Reaktionsgases **I;**
(j₂) Synthese von Produkt aus Reaktanden, welche in dem Reaktionsgas **I** enthalten sind, in einer zweiten Ammoniaksyntheseeinheit bei einem Druck P₂, unter Erzeugung eines Produktgases **J** umfassend nicht umgesetzten Reaktanden und Produkt sowie gegebenenfalls inerte Komponenten;
(k₂) Abtrennen von Produkt aus dem Produktgas **J** unter Erzeugung eines an Produkt abgereicherten Gasgemischs **K;**
(l₂) Aufteilen des Gasgemischs **K** in mindestens einen Teilstrom **L** und einen Teilstrom **M,** und Rückführen zumindest eines Teils des Teilstroms **L** als im zweiten Kreislauf geführtes Gasgemisch **H** zu Schritt (i₂); und
(m₂) Ausschleusen des Teilstroms **M.**

3. Verfahren nach Anspruch 1, welches weiterhin den Schritt umfasst:
(b₁) Aufteilen des Synthesegases **A** in mindestens einen Teilstrom **A₁** und einen Teilstrom **A₂** und Vermischen des Teilstroms **A₁** mit einem im ersten Kreislauf geführten Gasgemisch **B** unter Erzeugung eines Reaktionsgases **C.**

4. Verfahren nach Anspruch 3, welches weiterhin den Schritt umfasst:
(h₁) Vermischen des Teilstroms **E** mit dem Teilstrom **A₂** unter Bildung eines Teilstroms **E'** und Vermischen des Teilstroms **E'** mit zumindest einem Teil eines in einem zweiten Kreislauf geführten Gasgemischs **H** umfassend nicht umgesetzte Reaktanden, Produkt und gegebenenfalls inerte Komponenten unter Erzeugung eines Reaktionsgases **I.**

5. Verfahren gemäß einem der Ansprüche 1 bis 4, wobei der Druck P₁ gemäß Schritt (e₁) und der Druck P₂ gemäß Schritt (j₁), oder der Druck P₁ gemäß Schritt (d₂) und der Druck P₂ gemäß Schritt (j₂) im Wesentlichen gleich groß sind.

6. Verfahren gemäß einem der vorstehenden Ansprüche, wobei der Volumenstrom und/oder der Massenstrom des Teilstroms **D** gemäß Schritt (d₁) größer ist als der Volumenstrom bzw. der Massenstrom des Teilstroms **E.**

7. Verfahren gemäß einem der vorstehenden Ansprüche, wobei der Volumenstrom und/oder der Massenstrom des Gasgemischs **B** gemäß Schritt (g₁) und/oder Schritt (f₂) größer ist als der Volumenstrom bzw. der Massenstrom des Gasgemischs **H.**

8. Verfahren gemäß einem der vorstehenden Ansprüche,
- wobei das Synthesegas **A** gemäß Schritt (b₁) oder (b₂) in die Teilströme **A₁** und **A₂** aufgeteilt wird,
- wobei der Volumenstrom und/oder der Massenstrom des Teilstroms **A₁** größer ist als der Volumenstrom bzw. der Massenstrom des Teilstroms **A₂** gemäß Schritt (b₁); oder
- wobei der Volumenstrom und/oder der Massenstrom des Teilstroms **A₁** gemäß Schritt (b₂) größer ist als der Volumenstrom bzw. der Massenstrom des Teilstroms **A₂** gemäß Schritt (b₂).

9. Verfahren gemäß einem der vorstehenden Ansprüche, wobei das in den Schritten (a₁) und/oder (a₂) bereitgestellte Synthesegas **A** bzw. der in den Schritten (b₁) und/oder (b₂) gebildete Teilstrom **A₁** bzw. das in den Schritten (c₁) und/oder (c₂) erzeugte Reaktionsgas C vor der Synthese von Produkt in den Schritten (e₁) und/oder (d₂) auf einen Druck von mindestens 100 bara verdichtet wird.

10. Verfahren gemäß einem der vorstehenden Ansprüche, wobei das in den Schritten (i₁) und/oder (i₂) erzeugte Reaktionsgas **I** vor der Synthese von Produkt in den Schritten (j₁) und/oder (j₂) auf einen Druck von mindestens 100 bara verdichtet wird.

11. Verfahren gemäß einem der vorstehenden Ansprüche, wobei das im Kreislauf geführte Gasgemisch **H** vor dem Vermischen mit dem Teilstrom **E** bzw. dem Teilstrom **E'** in den Schritten (i₁) und/oder (i₂) auf einen Druck von mindestens 100 bara verdichtet wird.

12. Verfahren nach einem der vorstehenden Ansprüche, wobei das in den Schritten (a₁) oder (a₂) bereitgestellte Synthesegas durch Reformierung von Kohlenwasserstoffen hergestellt wird, wobei die Reformierung in einem Dampfreformer oder in einem autothermen Reformer erfolgt.

13. Vorrichtung zur Herstellung eines Produkts umfassend die folgenden miteinander in Wirkverbindung stehenden Komponenten:
(A₁) eine erste Mischvorrichtung (1) konfiguriert zum Vermischen eines Synthesegases **A** bzw. eines Teilstroms **A₁** mit zumindest einem Teil eines in einem ersten Kreislauf geführten Gasgemischs **B** unter Erzeugung eines Reaktionsgases **C;**
(B₁) eine erste Aufteilvorrichtung (3), konfiguriert zum Aufteilen des Reaktionsgases **C** in einen ersten Teilstrom **D** und einen zweiten Teilstrom **E;**
(C₁) eine erste Reaktionsvorrichtung (4) umfassend mindestens einen Wärmetauscher, konfiguriert zur Synthese von Produkt aus Reaktanden, welche in dem Teilstrom **D** enthalten sind, unter Erzeugung eines Produktgases **F;**
(D₁) eine erste Abtrennvorrichtung (5) umfassend mindestens einen Wärmetauscher, konfiguriert zum Abtrennen von Produkt aus dem Produktgas **F** unter Erzeugung eines an Produkt abgereicherten Gasgemischs **G;**
(E₁) Mittel konfiguriert zum Rückführen des Gasgemischs **G** als im ersten Kreislauf geführtes Gasgemisch **B** zur ersten Mischvorrichtung (1);
(H₁) eine zweite Mischvorrichtung (6), konfiguriert zum Vermischen des zweiten Teilstroms **E** bzw. des Teilstroms **E'** mit zumindest einem Teil eines in einem zweiten Kreislauf geführten Gasgemischs **H** unter Erzeugung eines Reaktionsgases **I;**
(l₁) eine weitere Reaktionsvorrichtung (7) umfassend mindestens einen Wärmetauscher, konfiguriert zur Synthese von Produkt aus Reaktanden, welche in dem Reaktionsgas **I** enthalten sind, unter Erzeugung eines Produktgases **J;**
(J₁) eine weitere Abtrennvorrichtung (8) umfassend mindestens einen Wärmetauscher, konfiguriert zum Abtrennen von Produkt aus dem Produktgas **J** unter Erzeugung eines Gasgemischs **K;**
(K₁) eine zweite Aufteilvorrichtung (9), konfiguriert zum Aufteilen des Gasgemischs **K** in mindestens einen Teilstrom **L** und einen Teilstrom **M;**
(L₁) Mittel konfiguriert zum Rückführen des Teilstroms **L** als im zweiten Kreislauf geführtes Gasgemisch **H** zur zweiten Mischvorrichtung (6); und
(M₁) Mittel konfiguriert zum Ausschleusen von Teilstrom **M,** wobei dieser Teilstrom M ein Purgegasstrom ist.

14. Vorrichtung zur Herstellung eines Produkts umfassend die folgenden miteinander in Wirkverbindung stehenden Komponenten:
(A₂) eine erste Mischvorrichtung (1) konfiguriert zum Vermischen eines Teilstroms **A₁** mit einem Teilstrom **N** unter Erzeugung eines Reaktionsgases **C;**
(B₂) eine erste Reaktionsvorrichtung (4) umfassend mindestens einen Wärmetauscher, konfiguriert zur Synthese von Produkt aus Reaktanden, welche in dem Reaktionsgas **C** enthalten sind, unter Erzeugung eines Produktgases **F;**
(C₂) eine erste Abtrennvorrichtung (5) umfassend mindestens einen Wärmetauscher, konfiguriert zum Abtrennen von Produkt aus dem Produktgas **F** unter Erzeugung eines an Produkt abgereicherten Gasgemischs **G;**
(D₂) Mittel konfiguriert zum Rückführen des Gasgemischs **G** als im Kreislauf geführtes Gasgemisch **B;**
(E₂) eine erste Aufteilvorrichtung (3), konfiguriert zum Aufteilen des Gasgemischs **B** in einen Teilstrom **E** und einen Teilstrom **N;**
(F₂) eine weitere Aufteilvorrichtung (10), konfiguriert zum Aufteilen des Synthesegases **A** in mindestens einen Teilstrom **A₁** und einen Teilstrom **A₂**;
(G₂) eine weitere Mischvorrichtung (11), konfiguriert zum Vermischen des Teilstroms **E** mit dem Teilstrom **A₂** unter Erzeugung eines Teilstroms **E';**
(H₂) eine zweite Mischvorrichtung (6), konfiguriert zum Vermischen des Teilstroms **E** bzw. des Teilstroms **E'** mit zumindest einem Teil eines in einem Kreislauf geführten Gasgemischs **H** unter Erzeugung eines Reaktionsgases **I;**
(l₂) eine weitere Reaktionsvorrichtung (7) umfassend mindestens einen Wärmetauscher, konfiguriert zur Synthese von Produkt aus Reaktanden, welche in dem Reaktionsgas **I** enthalten sind, unter Erzeugung eines Produktgases **J;**
(J₂) eine weitere Abtrennvorrichtung (8) umfassend mindestens einen Wärmetauscher, konfiguriert zum Abtrennen von Produkt aus dem Produktgas **J** unter Erzeugung eines Gasgemischs **K;**
(K₂) eine zweite Aufteilvorrichtung (9), konfiguriert zum Aufteilen des Gasgemischs **K** in mindestens einen Teilstrom **L** und einen Teilstrom **M;**
(L₂) Mittel konfiguriert zum Rückführen des Teilstroms **L** als im Kreislauf geführtes Gasgemisch **H** zur zweiten Mischvorrichtung; und
(M₂) Mittel konfiguriert zum Ausschleusen von Teilstrom **M.**

15. Vorrichtung nach Anspruch 13, welche weiterhin umfasst:
(F₁) eine weitere Aufteilvorrichtung (10), konfiguriert zum Aufteilen des Synthesegases **A** in mindestens einen Teilstrom **A₁** und einen Teilstrom **A₂**;
(G₁) eine weitere Mischvorrichtung (11), konfiguriert zum Vermischen des Teilstroms **E** mit dem Teilstrom **A₂** unter Erzeugung eines Teilstroms **E'.**

16. Vorrichtung gemäß Anspruch 13 oder 15,
- wobei die Vorrichtung gemäß Komponenten (A₁) bis (M₁) weiterhin umfasst:
(R₁) einen ersten Verdichter (2), welcher
vor der ersten Mischvorrichtung (1) angeordnet ist, konfiguriert zum Verdichten des Synthesegases **A** bzw. des Teilstroms **A₁** etwa auf einen Druck P₁;
oder
nach der ersten Mischvorrichtung (1) angeordnet ist, konfiguriert zum Verdichten des Reaktionsgases **C** etwa auf einen Druck P₁; und/oder
(S₁) einen zweiten Verdichter (12), welcher
nach der zweiten Aufteilvorrichtung (9) und vor der zweiten Mischvorrichtung (6) angeordnet ist, konfiguriert zum Verdichten des Gasgemischs **H** etwa auf einen Druck P₂;
oder
nach der zweiten Mischvorrichtung (6) angeordnet ist, konfiguriert zum Verdichten des Reaktionsgases I etwa auf einen Druck P₂;

17. Vorrichtung gemäß Anspruch 14,
- wobei die Vorrichtung gemäß Komponenten (A₂) bis (M₂) weiterhin umfasst:
(R₂) einen ersten Verdichter (2), welcher
vor der ersten Aufteilvorrichtung (3) angeordnet ist, konfiguriert zum Verdichten des Gasgemischs **B** etwa auf einen Druck P₁;
oder
nach der ersten Mischvorrichtung (1) angeordnet ist, konfiguriert zum Verdichten des Teilstroms **N** etwa auf einen Druck P₁; und/oder
(S₂) einen zweiten Verdichter (12), welcher
nach der zweiten Aufteilvorrichtung (9) und vor der zweiten Mischvorrichtung (6) angeordnet ist, konfiguriert zum Verdichten des Gasgemischs **H** etwa auf einen Druck P₂;
oder
nach der zweiten Mischvorrichtung (6) angeordnet ist, konfiguriert zum Verdichten des Reaktionsgases I etwa auf einen Druck P₂.

18. Verwendung der Vorrichtung gemäß einem der Ansprüche 13 bis 17 in einem Verfahren gemäß einem der Ansprüche 1 bis 13, bevorzugt Verwendung der Vorrichtung gemäß Komponenten (A₁) bis (M₁) in einem Verfahren gemäß Schritten (a₁) bis (m₁) und/oder Verwendung der Vorrichtung gemäß Komponenten (A₂) bis (M₂) in einem Verfahren gemäß Schritten (a₂) bis (m₂).

## Claims

1. Process for producing ammonia, wherein the process comprises the following steps:
(a₁) provision of a synthesis gas **A** comprising the reactants nitrogen and hydrogen and optionally product and optionally inert components;
(c₁) mixing of the synthesis gas **A** with a gas mixture **B** conveyed in a first circuit to produce a reaction gas **C;**
(d₁) division of the reaction gas **C** into a substream **D** and a substream **E;**
(e₁) synthesis of product from the reactants present in the substream **D** in a first ammonia synthesis unit (4) at a pressure P₁ to produce a product gas **F** comprising unreacted reactants and products and optionally inert components;
(f₁) separation of product from the product gas **F** to produce a gas mixture **G** depleted in product;
(g₁) recirculation of the gas mixture **G** as gas mixture **B** conveyed in the first circuit to step (c₁) ;
(i₁) mixing of the substream **E** with at least part of a gas mixture **H** which is conveyed in a second circuit and comprises unreacted reactants, product and optionally inert components to produce a reaction gas **I;**
where, after the division of the reaction gas into the two substreams D and E, the first substream **D** is fed to the first ammonia synthesis unit (4) which is part of the first synthesis circuit while the second substream **E** is transferred into a second synthesis circuit, mixed there with recycle gas **H** from the second synthesis circuit and then fed to a second ammonia synthesis unit (7) which is part of the second synthesis circuit;
(j₁) synthesis of product from reactants present in the reaction gas **I** in the second ammonia synthesis unit at a pressure P₂ to produce a product gas **J** comprising unreacted reactants and product and optionally inert components;
(k₁) separation of product from the product gas **J** to produce a gas mixture **K** depleted in product;
(l₁) division of the gas mixture **K** into at least one substream **L** and a substream **M** and recirculation of at least part of the substream **L** as circulated gas mixture **H** to step (i₁); and
(m₁) discharge of the substream **M.**

2. Process for preparing ammonia, wherein the process comprises the following steps:
(a₂) provision of a synthesis gas **A** comprising the reactants nitrogen and hydrogen and optionally product and optionally inert components;
(b₂) division of the synthesis gas **A** into at least a substream **A₁** and a substream **A₂**;
(c₂) mixing of the substream **A₁** with a substream **N** to produce a reaction gas **C;**
(d₂) synthesis of product from reactants present in the reaction gas **C** in a first ammonia synthesis unit at a pressure P₁ to produce a product gas **F** comprising unreacted reactants and product and optionally inert components;
(e₂) separation of product from the product gas **F** to produce a gas mixture **G** depleted in product;
(f₂) recirculation of the gas mixture **G** as gas mixture **B** conveyed in the first circuit;
(g₂) division of the gas mixture **B** into a substream **E** and a substream **N;**
(h₂) mixing of the substream **E** with the substream **A₂** to form a substream **E';**
(i₂) mixing of the substream **E'** with at least part of a gas mixture **H** which is conveyed in a second circuit and comprises unreacted reactants, product and optionally inert components to produce a reaction gas **I;**
(j₂) synthesis of product from reactants present in the reaction gas **I** in a second ammonia synthesis unit and a pressure P₂ to produce a product gas **J** comprising unreacted reactants and product and optionally inert components;
(k₂) separation of product from the product gas **J** to produce a gas mixture **K** depleted in product;
(l₂) division of the gas mixture **K** into at least a substream **L** and a substream **M** and recirculation of at least part of the substream **L** as gas mixture **H** conveyed in the second circuit to step (i₂); and
(m₂) discharge of the substream **M.**

3. Process according to Claim 1, further comprising the step:
(b₁) division of the synthesis gas **A** into at least a substream **A₁** and a substream **A₂** and mixing of the substream **A₁** with a gas mixture **B** conveyed in the first circuit to produce a reaction gas **C.**

4. Process according to Claim 3, further comprising the step: (h₁) mixing of the substream **E** with the substream **A₂** to form a substream **E'** and mixing of the substream **E'** with at least part of a gas mixture **H** which is conveyed in a second circuit and comprises unreacted reactants, product and optionally inert components to produce a reaction gas **I.**

5. Process according to any of Claims 1 to 4, wherein the pressure P₁ in step (e₁) and the pressure P₂ in step (j₁), or the pressure P₁ in step (d₂) and the pressure P₂ in step (j₂) are essentially equal.

6. Process according to any of the preceding claims, wherein the volume flow and/or the mass flow of the substream **D** in step (d₁) is greater than the volume flow or the mass flow of the substream **E.**

7. Process according to any of the preceding claims, wherein the volume flow and/or the mass flow of the gas mixture **B** in step (g₁) and/or step (f₂) is greater than the volume flow or the mass flow of the gas mixture **H.**

8. Process according to any of the preceding claims,
- wherein the synthesis gas **A** is divided in step (b₁) or (b₂) into the substreams **A₁** and **A₂**,
- wherein the volume flow and/or the mass flow of the substream **A₁** is greater than the volume flow or the mass flow of the substream **A₂** in step (b₁); or
- wherein the volume flow and/or the mass flow of the substream **A₁** in step (b₂) is greater than the volume flow or the mass flow of the substream **A₂** in step (b₂).

9. Process according to any of the preceding claims, wherein the synthesis gas **A** provided in steps (a₁) and/or (a₂) or the substream **A₁** formed in steps (b₁) and/or (b₂) or the reaction gas **C** produced in steps (c₁) and/or (c₂) is compressed to a pressure of at least 100 bara before the synthesis of product in steps (e₁) and/or (d₂) .

10. Process according to any of the preceding claims, wherein the reaction gas **I** produced in steps (i₁) and/or (i₂) is compressed to a pressure of at least 100 bara before the synthesis of product in steps (j₁) and/or (j₂).

11. Process according to any of the preceding claims, wherein the circulated gas mixture **H** is compressed to a pressure of at least 100 bara before mixing with the substream **E** or the substream **E'** in steps (i₁) and/or (i₂) .

12. Process according to any of the preceding claims, wherein the synthesis gas provided in steps (a₁) or (a₂) is produced by reforming of hydrocarbons, with the reforming being carried out in a steam reformer or in an autothermal reformer.

13. Apparatus for producing a product, comprising the following interacting components:
(A₁) a first mixing apparatus (1) configured for mixing a synthesis gas **A** or a substream **A₁** with at least part of a gas mixture **B** conveyed in a first circuit to produce a reaction gas **C;**
(B₁) a first division apparatus (3) configured for dividing the reaction gas **C** into a first substream **D** and a second substream **E;**
(C₁) a first reaction apparatus (4) comprising at least one heat exchanger and configured for the synthesis of product from reactants present in the substream **D** to produce a product gas **F;**
(D₁) a first separation apparatus (5) comprising at least one heat exchanger and configured for separation of product from the product gas **F** to produce a gas mixture **G** depleted in product;
(E₁) means configured for recirculation of the gas mixture **G** as gas mixture **B** conveyed in the first circuit to the first mixing apparatus (1) ;
(H₁) a second mixing apparatus (6) configured for mixing the second substream **E** or the substream **E'** with at least part of a gas mixture **H** conveyed in a second circuit to produce a reaction gas **I;**
(I₁) a further reaction apparatus (7) comprising at least one heat exchanger and configured for the synthesis of product from reactants present in the reaction gas **I** to produce a product gas **J;**
(J₁) a further separation apparatus (8) comprising at least one heat exchanger configured for separation of product from the product gas **J** to produce a gas mixture **K;**
(K₁) a second division apparatus (9) configured for dividing the gas mixture **K** into at least a substream **L** and a substream **M;**
(L₁) means configured for recirculation of the substream **L** as gas mixture **H** conveyed in the second circuit to the second mixing apparatus (6); and
(M₁) means configured for discharge of substream **M,** where the substream M is a purge gas stream.

14. Apparatus for producing a product, comprising the following interacting components:
(A₂) a first mixing apparatus (1) configured for mixing a substream **A₁** with a substream **N** to produce a reaction gas **C;**
(B₂) a first reaction apparatus (4) comprising at least one heat exchanger and configured for synthesis of product from reactants present in the reaction gas **C** to produce a product gas **F;**
(C₂) a first separation apparatus (5) comprising at least one heat exchanger and configured for separation of product from the product gas **F** to produce a gas mixture **G** depleted in product;
(D₂) means configured for recirculation of the gas mixture **G** as circulated gas mixture **B;**
(E₂) a first division apparatus (3) configured for dividing the gas mixture **B** into a substream **E** and a substream **N;**
(F₂) a further division apparatus (10) configured for dividing the synthesis gas **A** into at least a substream **A₁** and a substream **A₂**;
(G₂) a further mixing apparatus (11) configured for mixing the substream **E** with the substream **A₂** to produce a substream **E';**
(H₂) a second mixing apparatus (6) configured for mixing the substream **E** or the substream **E'** with at least part of a circulated gas mixture **H** to produce a reaction gas **I;**
(I₂) a further reaction apparatus (7) comprising at least one heat exchanger and configured for the synthesis of product from reactants present in the reaction gas **I** to produce a product gas **J;**
(J₂) a further separation apparatus (8) comprising at least one heat exchanger and configured for separation of product from the product gas **J** to produce a gas mixture **K;**
(K₂) a second division apparatus (9) configured for dividing the gas mixture **K** into at least a substream **L** and a substream **M;**
(L₂) means configured for recirculation of the substream **L** as circulated gas mixture **H** to the second mixing apparatus; and
(M₂) means configured for discharge of substream **M.**

15. Apparatus according to Claim 13, further comprising:
(F₁) a further division apparatus (10) configured for dividing the synthesis gas **A** into at least a substream **A₁** and a substream **A₂**;
(G₁) a further mixing apparatus (11) configured for mixing the substream **E** with the substream **A₂** to produce a substream **E'.**

16. Apparatus according to Claim 13 or 15,
- wherein the apparatus comprising components (A₁) to (M₁) further comprises:
(R₁) a first compressor (2) which is arranged upstream of the first mixing apparatus (1) and is configured for compressing the synthesis gas **A** or the substream **A₁** to, for instance, a pressure P₁;
or
is arranged downstream of the first mixing apparatus (1) and is configured for compressing the reaction gas **C** to, for instance, a pressure P₁; and/or
(S₁) a second compressor (12) which is arranged downstream of the second division apparatus (9) and upstream of the second mixing apparatus (6) and is configured for compressing the gas mixture **H** to, for instance, a pressure P₂;
or
is arranged downstream of the second mixing apparatus (6) and is configured for compressing the reaction gas **I** to, for instance, a pressure P₂.

17. Apparatus according to Claim 14,
- wherein the apparatus comprising components (A₂) to (M₂) further comprises:
(R₂) a first compressor (2) which
is arranged upstream of the first division apparatus (3) and is configured for compressing the gas mixture **B** to, for instance, a pressure P₁;
or
is arranged downstream of the first mixing apparatus (1) and is configured for compressing the substream **N** to, for instance, a pressure P₁; and/or
(S₂) a second compressor (12) which is arranged downstream of the second division apparatus (9) and upstream of the second mixing apparatus (6) and is configured for compressing the gas mixture **H** to, for instance, a pressure
P₂;
or
is arranged downstream of the second mixing apparatus (6) and is configured for compressing the reaction gas **I** to, for instance, a pressure P₂.

18. Use of the apparatus according to any of Claims 13 to 17 in a process according to any of Claims 1 to 13, preferably use of the apparatus comprising components (A₁) to (M₁) in a process comprising steps (a₁) to (m₁) and/or use of the apparatus comprising components (A₂) to (M₂) in a process comprising steps (a₂) to (m₂) .

## Revendications

1. Procédé de fabrication d'ammoniac, le procédé comprenant les étapes suivantes :
(a₁) la mise à disposition d'un gaz de synthèse **A** comprenant les réactifs azote et hydrogène, ainsi qu'éventuellement un produit et éventuellement des composants inertes ;
(c₁) le mélange du gaz de synthèse **A** avec un mélange gazeux **B** acheminé dans un premier circuit pour générer un gaz réactionnel **C** ;
(d₁) le partage du gaz réactionnel **C** en un courant partiel **D** et un courant partiel **E** ;
(e₁) la synthèse d'un produit à partir des réactifs, qui sont contenus dans le courant partiel **D,** dans une première unité de synthèse d'ammoniac (4), à une pression P₁, pour générer un gaz de produit **F** comprenant des réactifs non réagis et un produit, ainsi qu'éventuellement des composants inertes ;
(f₁) la séparation du produit du gaz de produit **F** pour générer un mélange gazeux **G** appauvri en produit ;
(g₁) le recyclage du mélange gazeux **G** en tant que mélange gazeux **B** acheminé dans le premier circuit dans l'étape (c₁) ;
(i₁) le mélange du courant partiel **E** avec au moins une partie d'un mélange gazeux **H** acheminé dans un deuxième circuit, comprenant des réactifs non réagis, un produit et éventuellement des composants inertes pour générer un gaz réactionnel **I** ;
après le partage du gaz réactionnel en les deux courants partiels D et E, le premier courant partiel **D** étant introduit dans la première unité de synthèse d'ammoniac (4), qui fait partie du premier circuit de synthèse, tandis que le deuxième courant partiel **E** est transféré dans un deuxième circuit de synthèse, y est mélangé avec le gaz circulaire **H** issu du deuxième circuit de synthèse, puis est introduit dans une deuxième unité de synthèse d'ammoniac (7), qui fait partie du deuxième circuit de synthèse ;
(j₁) la synthèse d'un produit à partir de réactifs, qui sont contenus dans le gaz réactionnel **I,** dans la deuxième unité de synthèse d'ammoniac, à une pression P₂, pour générer un gaz de produit **J** comprenant des réactifs non réagis et un produit, ainsi qu'éventuellement des composants inertes ;
(k₁) la séparation d'un produit du gaz de produit **J** pour générer un mélange gazeux **K** appauvri en produit ;
(l₁) le partage du mélange gazeux **K** en au moins un courant partiel **L** et un courant partiel **M,** et le recyclage d'au moins une partie du courant partiel **L** en tant que mélange gazeux **H** acheminé dans le circuit dans l'étape (i₁) ; et
(m₁) l'évacuation du courant partiel **M.**

2. Procédé de fabrication d'ammoniac, le procédé comprenant les étapes suivantes :
(a₂) la mise à disposition d'un gaz de synthèse **A** comprenant les réactifs azote et hydrogène, ainsi qu'éventuellement un produit et éventuellement des composants inertes ;
(b₂) le partage du gaz de synthèse **A** en au moins un courant partiel **A₁** et un courant partiel **A₂** ;
(C₂) le mélange du courant partiel **A₁** avec un courant partiel **N** pour générer un gaz réactionnel **C** ;
(d₂) la synthèse d'un produit à partir de réactifs, qui sont contenus dans le gaz réactionnel **C,** dans une première unité de synthèse d'ammoniac à une pression P₁, pour générer un gaz de produit **F** comprenant des réactifs non réagis et un produit, ainsi qu'éventuellement des composants inertes ;
(e₂) la séparation du produit du gaz de produit **F** pour générer un mélange gazeux **G** appauvri en produit ;
(f₂) le recyclage du mélange gazeux **G** en tant que mélange gazeux **B** acheminé dans le premier circuit ;
(g₂) le partage du mélange gazeux **B** en un courant partiel **E** et un courant partiel **N** ;
(h₂) le mélange du courant partiel **E** avec le courant partiel **A₂** pour former un courant partiel **E'** ;
(i₂) le mélange du courant partiel **E'** avec au moins une partie d'un mélange gazeux **H** acheminé dans un deuxième circuit, comprenant des réactifs non réagis, un produit et éventuellement des composants inertes pour générer un gaz réactionnel **I** ;
(j₂) la synthèse d'un produit à partir de réactifs, qui sont contenus dans le gaz réactionnel **I,** dans la deuxième unité de synthèse d'ammoniac, à une pression P₂, pour générer un gaz de produit **J** comprenant des réactifs non réagis et un produit, ainsi qu'éventuellement des composants inertes ;
(k₂) la séparation d'un produit du gaz de produit **J** pour générer un mélange gazeux **K** appauvri en produit ;
(l₂) le partage du mélange gazeux **K** en au moins un courant partiel **L** et un courant partiel **M,** et le recyclage d'au moins une partie du courant partiel **L** en tant que mélange gazeux **H** acheminé dans le deuxième circuit dans l'étape (i₂) ; et
(m₂) l'évacuation du courant partiel **M.**

3. Procédé selon la revendication 1, qui comprend en outre l'étape suivante :
(b₁) le partage du gaz de synthèse **A** en au moins un courant partiel **A₁** et un courant partiel **A₂** et le mélange du courant partiel **A₁** avec un mélange gazeux **B** acheminé dans le premier circuit pour générer un gaz réactionnel **C.**

4. Procédé selon la revendication 3, qui comprend en outre l'étape suivante :
(h₁) le mélange du courant partiel **E** avec le courant partiel **A₂** pour former un courant partiel **E'** et le mélange du courant partiel **E'** avec au moins une partie d'un mélange gazeux **H** acheminé dans un deuxième circuit, comprenant des réactifs non réagis, un produit et éventuellement des composants inertes pour générer un gaz réactionnel **I.**

5. Procédé selon l'une quelconque des revendications 1 à 4, dans lequel la pression P₁ selon l'étape (e₁) et la pression P₂ selon l'étape (j₁), ou la pression P₁ selon l'étape (d₂) et la pression P₂ selon l'étape (j₂) sont essentiellement égales.

6. Procédé selon l'une quelconque des revendications précédentes, dans lequel le débit volumique et/ou le débit massique du courant partiel **D** selon l'étape (d₁) sont supérieurs au débit volumique ou au débit massique du courant partiel **E.**

7. Procédé selon l'une quelconque des revendications précédentes, dans lequel le débit volumique et/ou le débit massique du mélange gazeux **B** selon l'étape (g₁) et/ou l'étape (f₂) sont supérieurs au débit volumique ou au débit massique du mélange gazeux **H.**

8. Procédé selon l'une quelconque des revendications précédentes,
- dans lequel le gaz de synthèse **A** selon l'étape (b₁) ou (b₂) est partagé en les courants partiels **A₁** et **A₂**,
- dans lequel le débit volumique et/ou le débit massique du courant partiel **A₁** sont supérieurs au débit volumique ou au débit massique du courant partiel **A₂** selon l'étape (b₁) ; ou
- dans lequel le débit volumique et/ou le débit massique du courant partiel **A₁** selon l'étape (b₂) sont supérieurs au débit volumique ou au débit massique du courant partiel **A₂** selon l'étape (b₂) .

9. Procédé selon l'une quelconque des revendications précédentes, dans lequel le gaz de synthèse **A** mis à disposition dans les étapes (a₁) et/ou (a₂) ou le courant partiel **A₁** formé dans les étapes (b₁) et/ou (b₂) ou le gaz réactionnel **C** généré dans les étapes (c₁) et/ou (c₂) sont comprimés avant la synthèse d'un produit dans les étapes (e₁) et/ou (d₂) à une pression d'au moins 100 bara.

10. Procédé selon l'une quelconque des revendications précédentes, dans lequel le gaz réactionnel **I** généré dans les étapes (i₁) et/ou (i₂) est comprimé avant la synthèse d'un produit dans les étapes (j₁) et/ou (j₂)à une pression d'au moins 100 bara.

11. Procédé selon l'une quelconque des revendications précédentes, dans lequel le mélange gazeux **H** acheminé dans le circuit est comprimé à une pression d'au moins 100 bara avant le mélange avec le courant partiel **E** ou le courant partiel **E'** dans les étapes (i₁) et/ou (i₂).

12. Procédé selon l'une quelconque des revendications précédentes, dans lequel le gaz de synthèse mis à disposition dans les étapes (a₁) ou (a₂) est fabriqué par reformage d'hydrocarbures, le reformage ayant lieu dans un reformeur à la vapeur ou dans un reformeur autotherme.

13. Dispositif pour la fabrication d'un produit comprenant les composants suivants en liaison active les uns avec les autres :
(A₁) un premier dispositif de mélange (1) configuré pour le mélange d'un gaz de synthèse **A** ou d'un courant partiel **A₁** avec au moins une partie d'un mélange gazeux **B** acheminé dans un premier circuit pour générer un gaz réactionnel **C** ;
(B₁) un premier dispositif de partage (3), configuré pour le partage du gaz réactionnel **C** en un premier courant partiel **D** et un deuxième courant partiel **E** ;
(C₁) un premier dispositif de réaction (4) comprenant au moins un échangeur de chaleur, configuré pour la synthèse d'un produit à partir de réactifs, qui sont contenus dans le courant partiel **D,** pour générer un gaz de produit **F** ;
(D₁) un premier dispositif de séparation (5) comprenant au moins un échangeur de chaleur, configuré pour la séparation du produit du gaz de produit **F** pour générer un mélange gazeux **G** appauvri en produit ;
(E₁) des moyens configurés pour le recyclage du mélange gazeux **G** en tant que mélange gazeux **B** acheminé dans le premier circuit dans le premier dispositif de mélange (1) ;
(H₁) un deuxième dispositif de mélange (6), configuré pour le mélange du deuxième courant partiel **E** ou du courant partiel **E'** avec au moins une partie d'un mélange gazeux **H** acheminé dans un deuxième circuit, pour générer un gaz réactionnel **I** ;
(I₁) un dispositif de réaction supplémentaire (7) comprenant au moins un échangeur de chaleur, configuré pour la synthèse d'un produit à partir de réactifs, qui sont contenus dans le gaz réactionnel **I,** pour générer un gaz de produit **J** ;
(J₁) un dispositif de séparation supplémentaire (8) comprenant au moins un échangeur de chaleur, configuré pour la séparation d'un produit du gaz de produit **J** pour générer un mélange gazeux **K** ;
(K₁) un deuxième dispositif de partage (9), configuré pour le partage du mélange gazeux **K** en au moins un courant partiel **L** et un courant partiel **M** ;
(L₁) des moyens configurés pour le recyclage du courant partiel **L** en tant que mélange gazeux **H** acheminé dans le deuxième circuit dans le deuxième dispositif de mélange (6) ; et
(M₁) des moyens configurés pour l'évacuation du courant partiel **M,** ce courant partiel M étant un courant gazeux de purge.

14. Dispositif pour la fabrication d'un produit comprenant les composants suivants en liaison active les uns avec les autres :
(A₂) un premier dispositif de mélange (1) configuré pour le mélange d'un courant partiel **A₁** ou d'un courant partiel **N** pour générer un gaz réactionnel **C** ;
(B₂) un premier dispositif de réaction (4) comprenant au moins un échangeur de chaleur, configuré pour la synthèse d'un produit à partir de réactifs, qui sont contenus dans le gaz réactionnel **C,** pour générer un gaz de produit **F** ;
(C₂) un premier dispositif de séparation (5) comprenant au moins un échangeur de chaleur, configuré pour la séparation d'un produit à partir du gaz de produit **F** pour générer un mélange gazeux **G** appauvri en produit ;
(D₂) des moyens configurés pour le recyclage du mélange gazeux **G** en tant que mélange gazeux **B** acheminé dans le circuit ;
(E₂) un premier dispositif de partage (3), configuré pour le partage du mélange gazeux **B** en un courant partiel **E** et un courant partiel **N** ;
(F₂) un dispositif de partage supplémentaire (10), configuré pour le partage du gaz de synthèse **A** en au moins un courant partiel **A₁** et un courant partiel **A₂** ;
(G₂) un dispositif de mélange supplémentaire (11), configuré pour le mélange du courant partiel **E** avec le courant partiel **A₂** pour générer un courant partiel **E'** ;
(H₂) un deuxième dispositif de mélange (6), configuré pour le mélange du courant partiel **E** ou du courant partiel **E'** avec au moins une partie d'un mélange gazeux **H** acheminé dans un circuit pour générer un gaz réactionnel **I** ;
(I₂) un dispositif de réaction supplémentaire (7) comprenant au moins un échangeur de chaleur, configuré pour la synthèse d'un produit à partir de réactifs, qui sont contenus dans le gaz réactionnel **I,** pour générer un gaz de produit **J** ;
(J₂) un dispositif de séparation supplémentaire (8) comprenant au moins un échangeur de chaleur, configuré pour la séparation d'un produit du gaz de produit **J** pour générer un mélange gazeux **K** ;
(K₂) un deuxième dispositif de partage (9), configuré pour le partage du mélange gazeux **K** en au moins un courant partiel **L** et un courant partiel **M** ;
(L₂) des moyens configurés pour le recyclage du courant partiel **L** en tant que mélange gazeux **H** acheminé dans le deuxième circuit dans le deuxième dispositif de mélange ; et
(M₂) des moyens configurés pour l'évacuation du courant partiel **M.**

15. Dispositif selon la revendication 13, qui comprend en outre :
(F₁) un dispositif de partage supplémentaire (10), configuré pour le partage du gaz de synthèse **A** en au moins un courant partiel **A₁** et un courant partiel **A₂** ;
(G₁) un dispositif de mélange supplémentaire (11), configuré pour le mélange du courant partiel **E** avec le courant partiel **A₂** pour générer un courant partiel **E'**.

16. Dispositif selon la revendication 13 ou 15,
- dans lequel le dispositif selon les composants (A₁) à (M₁) comprend en outre :
(R₁) un premier compresseur (2), qui
est agencé avant le premier dispositif de mélange (1), configuré pour la compression du gaz de synthèse **A** ou du courant partiel **A₁** environ à une pression P₁ ;
ou
est agencé après le premier dispositif de mélange (1), configuré pour la compression du gaz réactionnel **C** environ à une pression P₁ ; et/ou
(S₁) un deuxième compresseur (12), qui
est agencé après le deuxième dispositif de partage (9) et avant le deuxième dispositif de mélange (6), configuré pour la compression du mélange gazeux **H** environ à une pression P₂ ;
ou
est agencé après le deuxième dispositif de mélange (6), configuré pour la compression du gaz réactionnel **I** environ à une pression P₂.

17. Dispositif selon la revendication 14,
- dans lequel le dispositif selon les composants (A₂) à (M₂) comprend en outre :
(R₂) un premier compresseur (2), qui
est agencé avant le premier dispositif de partage (3), configuré pour la compression du mélange gazeux **B** environ à une pression P₁ ;
ou
est agencé après le premier dispositif de mélange (1), configuré pour la compression du courant partiel **N** environ à une pression P₁ ; et/ou
(S₂) un deuxième compresseur (12), qui
est agencé après le deuxième dispositif de partage (9) et avant le deuxième dispositif de mélange (6), configuré pour la compression du mélange gazeux **H** environ à une pression P₂ ;
ou
est agencé après le deuxième dispositif de mélange (6), configuré pour la compression du gaz réactionnel **I** environ à une pression P₂.

18. Utilisation du dispositif selon l'une quelconque des revendications 13 à 17 dans un procédé selon l'une quelconque des revendications 1 à 13, de préférence utilisation du dispositif selon les composants (A₁) à (M₁) dans un procédé selon les étapes (a₁) à (m₁) et/ou utilisation du dispositif selon les composants (A₂) à (M₂) dans un procédé selon les étapes (a₂) à (m₂) .
